(19) Europäisches Patentamt

European Patent Office

Office européen des brevets

(11) **EP 4 227 846 A1**

(12) **EUROPEAN PATENT APPLICATION**

(43) Date of publication:
**16.08.2023 Bulletin 2023/33**

(21) Application number: **22156649.0**

(22) Date of filing: **14.02.2022**

(51) International Patent Classification (IPC):
**G06F 30/23** $^{(2020.01)}$    **G06F 111/06** $^{(2020.01)}$
**G06F 119/02** $^{(2020.01)}$    **G06F 119/04** $^{(2020.01)}$

(52) Cooperative Patent Classification (CPC):
**G06F 30/23;** G06F 2111/06; G06F 2119/02;
G06F 2119/04

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dassault Systemes Deutschland GmbH
20095 Hamburg (DE)**

(72) Inventors:
- **Pedersen, Claus Bech Wittendorf
  Hamburg (DE)**
- **Sartorti, Roman
  Hamburg (DE)**
- **Moecker, Torsten
  Hamburg (DE)**

(74) Representative: **Bandpay & Greuter
30, rue Notre-Dame des Victoires
75002 Paris (FR)**

(54) **A DESIGN METHOD BASED ON FATIGUE DAMAGE SENSITIVITY COMPUTATION**

(57)    The disclosure notably relates to a computer-implemented method for designing a mechanical product formed in one or more materials. The method comprises providing inputs including a finite element model representing the mechanical product and having an initial value of design variables, one or more load cases, a corresponding load history for each load case, boundary conditions, fatigue properties of the one or more materials, and a fatigue calculation scheme. The method further comprises computing a distribution of fatigue damage over the finite element model based on the inputs, computing a distribution of sets of fatigue damage sensitivities over the finite element model based on the computed distribution of fatigue damage, each fatigue damage sensitivity of each set approximating a derivative of the fatigue damage relative to a respective design variable, and updating the value of the design variables based on the fatigue damage sensitivities.

**EP 4 227 846 A1**

**Description**

**TECHNICAL FIELD**

The disclosure relates to the field of computer programs and systems, and more specifically to a method, system and program for designing a mechanical product formed in one or more materials.

**BACKGROUND**

A number of systems and programs are offered on the market for the design, the engineering and the manufacturing of objects. CAD is an acronym for Computer-Aided Design, e.g., it relates to software solutions for designing an object. CAE is an acronym for Computer-Aided Engineering, e.g., it relates to software solutions for simulating the physical behavior of a future product. CAM is an acronym for Computer-Aided Manufacturing, e.g., it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA, SIMULIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

Some of these systems and programs provide functionalities for designing a 3D modeled object representing a mechanical product formed in one or more materials. Said systems and programs provide automated product design based upon optimization and simulation, and more specifically, some solutions integrate a fatigue damage analysis in such designs. The following documents are related to said systems and programs:

[1] Holmberg, E., "Stress and fatigue constrained topology optimization", Diss. Linköping University, 2016;
[2] Oest, J., "Structural Optimization with Fatigue Constraints", Diss. Aalborg University, 2017;
[3] Zhang et al., "Fatigue-based topology optimization with non-proportional loads", Computer Methods in Applied Mechanics and Engineering, 345, pp. 805-825, 2019;
[4] Suresh, "Topology Optimization for Additive Manufacturing Involving High-Cycle Fatigue", Vol. 1878, Linköping University Electronic Press, 2020;
[5] Olesen et al., "Simultaneous optimization of topology and print orientation for transversely isotropic fatigue", Structural and Multidisciplinary Optimization, pp. 1-22, 2021;
[6] Jeong et al., "Fatigue and static failure considerations using a topology optimization method", Applied Mathematical Modelling, 39(3-4), pp. 1137-1162, 2015;
[7] Lee et al., "Topology optimization considering fatigue life in the frequency domain", Computers & Mathematics with Applications, 70(8), pp. 1852-1877, 2015; and
[8] Gerzen et al., "Fatigue sensitivities for sizing optimization of shell structures", 12th world congress on structural and multidisciplinary optimization. 2017.

All the above methods are restricted to a specific pre-coded fatigue calculation scheme in the adjoint sensitivity implementation (thereby any modification in the scheme requires substantial changes in the code), are unable to handle non-proportional fatigue loading, require analytical derivative computations (which is impractical for mechanical loads), and/or do not support critical plane analysis (despite the fact that such analysis is widely used in industrial applications).

Within this context, there is still a need for an improved method for designing a mechanical product formed in one or more materials.

**SUMMARY**

It is therefore provided a computer-implemented method for designing a mechanical product formed in one or more materials. The method comprises providing inputs including a finite element model representing the mechanical product and having an initial value of design variables, one or more load cases, a corresponding load history for each load case, boundary conditions, fatigue properties of the one or more materials, and a fatigue calculation scheme. The method further comprises computing a distribution of fatigue damage over the finite element model based on the inputs,

computing a distribution of sets of fatigue damage sensitivities over the finite element model based on the computed distribution of fatigue damage, each fatigue damage sensitivity of each set approximating a derivative of the fatigue damage relative to a respective design variable, and updating the value of the design variables based on the fatigue damage sensitivities.

The method may comprise one or more of the following:

- each fatigue damage is a function of the design variables and one or more stresses each applied by one of the one or more load cases, the computing of the distribution of sets of fatigue damage sensitivities comprising, for each fatigue damage sensitivity, computing terms each representing an approximation of a partial derivative of the fatigue damage ($D_k$) relative to each respective stress;
- each said computed term consists of finite difference approximations of the partial derivative of the fatigue damage each relative to a stress component of the respective stress.;
- the finite difference approximation consists of a backward finite difference approximation, a forward finite difference approximation, a central finite difference approximation, or a complex step approximation;
- each fatigue damage sensitivity consists of a sum of an approximation of a partial derivative of the fatigue damage relative to the respective design variable, and a multiplication of the approximation of the partial derivative of the fatigue damage relative to each stress, by a derivative of the stress relative to the respective design variable;
- the computing of the distribution of sets of fatigue damage sensitivities comprises, for each fatigue damage sensitivity, either summing

    o the approximation of the partial derivative of the fatigue damage relative to the respective design variable, and
    o the multiplication of the approximation of the partial derivative of the fatigue damage relative to each stress, by a derivative of the stress relative to the respective design variable;

  or summing

    o the computed approximation of the partial derivative of the fatigue damage relative to the respective design variable,
    o the approximation of the partial derivative of the fatigue damage relative to each stress multiplied by a partial derivative of said stress relative to the respective design variable, and
    o an inner product between a derivative of a residual relative to the respective design variable and an approximation of an adjoint variable, the adjoint variable being a solution of a linear system of equation, the linear system having a coefficient matrix consisting of partial derivative of the residual relative to a deformation as and right-hand side comprising a multiplication of the approximation of the partial derivative of the fatigue damage relative to each stress by a partial derivative of said stress relative to the deformation.

- the computing of the distribution of fatigue damage over the finite element model based on the inputs comprises computing one or more distributions of stress over the finite element model each corresponding to a respective load case, and for each computed distribution of stress, computing a distribution of a fatigue damage parameter over the finite element model using the fatigue calculation scheme and based on the fatigue properties of the one or more materials, wherein the computing the distribution of fatigue damage over the finite element model is based on the computed distribution of the fatigue damage parameter and the load history of each of each of the one or more load cases;
- the computing the distribution of fatigue damage parameter over the finite element model comprises, for each computed distribution of stress, computing one or more stresses and/or one or more strains corresponding to the computed distribution of stress according to the fatigue calculation scheme, the fatigue calculation scheme comprising any of the following functions a Brown-Miller function, a Von-Mises function, a signed Von-Mises function, a normal stress function, a normal strain function, and a user-defined function;
- the computing of the distribution of fatigue damage further comprises a critical plane analysis; and/or
- the computing of the distribution of fatigue damage further comprises rainflow-counting based on the load history of each of the one or more load cases.

It is further provided a computer-implemented method for designing a mechanical product comprising performing iterations of the design method so as to optimize performance of the mechanical product, wherein each iteration comprises updating the finite element model based on the updated value of the design variables.

It is further provided a process of production of a mechanical product comprising designing a mechanical product by performing the design method or the performing iterations of the design method, and producing the mechanical product based on the design.

It is further provided a computer program comprising instructions for performing the method.

It is further provided a computer readable storage medium having recorded thereon the computer program.

It is further provided a system comprising a processor coupled to a memory, the memory having recorded thereon the computer program.

**BRIEF DESCRIPTION OF THE DRAWINGS**

Non-limiting examples will now be described in reference to the accompanying drawings, where:

- FIG. 1 shows an example of a graphical user interface of the system
- FIG. 2 shows an example of the system; and
- FIG.s 3 to 15 illustrate the method.

**DETAILED DESCRIPTION**

It is proposed a computer-implemented method for designing a mechanical product formed in one or more materials. The method comprises providing inputs including a finite element model (FEM). The finite element model represents the mechanical product and has an initial value of design variables. The inputs further include one or more load cases, and for each load case, a corresponding load history. The inputs also include boundary conditions, fatigue properties of the one or more materials, and a fatigue calculation scheme. The method further comprises computing a distribution of fatigue damage over the finite element model based on the inputs. The method further comprises, based on the computed distribution of fatigue damage, computing a distribution of sets of fatigue damage sensitivities over the finite element model. Each fatigue damage sensitivity of each set approximates a derivative of the fatigue damage relative to a respective design variable. The method also comprises, based on the fatigue damage sensitivities, updating the value of the design variables.

Such a design method improves designing a mechanical product formed in one or more materials. The method notably comprises computing a distribution of fatigue damage over the finite element model and updating the value of the design variables of the finite element model based on fatigue damage sensitivities. In other words, the updating of the value of each of the design variables of the finite element model is based on an approximation of a derivative of the fatigue damage relative to the respective design variable, i.e., based on an approximation of the change of the fatigue damage relative to the design variables. Such a method integrates the fatigue damage behavior (via its sensitivities, i.e., derivative approximations) in updating the finite element model representing a respective mechanical product. Fatigue damage plays a crucial role in mechanical failure of mechanical products subject to cyclic (i.e., fluctuating or oscillatory) loading. Thus, by taking into account such fatigue damage in updating the design variables of the finite element model of the product, the method constitutes an improved design solution for mechanical products. Mechanical products designed by the method indeed present relatively good mechanical performances, once fabricated and used in practice.

In addition, the method computes a distribution of fatigue damage and a distribution of sets of fatigue damage sensitivities over the finite element model. In other words, the method provides a local computation of fatigue damage over the model, thereby enabling the determination of critical areas of the finite element model with respect to fatigue damage and/or fatigue damage sensitivities. The method may for example determine areas of the finite element model with highest fatigue damage (i.e., least/shortest fatigue life). Such a determination enables the method to update the design variables so as to improve mechanical performance of the mechanical product in the determined critical areas, for example by computing fatigue damage sensitivities at said determined critical areas and updating the finite element model based on the computed fatigue damage sensitivities.

Furthermore, by computing a fatigue damage sensitivity rather than a fatigue damage derivative relative to a respective design variable, in other words by computing an approximation of said derivative rather than its exact value, the method performs particularly efficiently and provides high robustness, compared to solutions based on an analytical computing of the derivative. In practice, the corresponding load histories of the one or more load cases may have a very complicated (e.g., highly oscillatory) time behavior, thereby an analytical derivative of the fatigue damage (which is dependent on said load cases) may not exist or be computationally too costly to compute.

"Designing a mechanical product" designates any action or series of actions which is at least part of a process of elaborating a modeled object of said product. The method thus generally manipulates modeled objects, such as the provided FEM and optionally a corresponding CAD model. The modeled object provides a representation of the mechanical product to a computer. A modeled object is any object defined by data stored e.g., in the database. By extension, the expression "modeled object" designates the data itself. The method may comprise creating the modeled object from scratch. Alternatively, the method may comprise providing a modeled object previously created, and then modifying the modeled object.

The modeled object may represent the geometry of a product to be manufactured in the real world subsequent to the completion of its virtual design with for instance a CAD/CAE software solution or CAD/CAE system as described hereinbelow. The modeled object may typically be a 3D modeled object, e.g., representing a product such as a part or an assembly of parts, or possibly an assembly of products. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e., increases the speed at which designers statistically accomplish their task). This speeds up the manufacturing process in the industry, as the design of the products is part of the manufacturing process. The mechanical product may be a (e.g., mechanical) part or product, or assembly of parts (or equivalently an assembly of parts, as the assembly of parts may be seen as a part itself from the point of view of the method, or the method may be applied independently to each part of the assembly), or more generally any rigid body assembly (e.g., a mobile mechanism). The mechanical product may be one of various and unlimited industrial fields, including: aerospace, architecture, construction, consumer goods, high-tech devices, industrial equipment, transportation, marine, and/or offshore oil/gas production or transportation. The modeled object designed by the method may thus represent an industrial product which may be any mechanical part, such as a part of a terrestrial vehicle (including e.g., car and light truck equipment, racing cars, motorcycles, truck and motor equipment, trucks and buses, trains), a part of an aerial vehicle (including e.g., airframe equipment, aerospace equipment, propulsion equipment, defense products, airline equipment, space equipment), a part of a naval vehicle (including e.g., navy equipment, commercial ships, offshore equipment, yachts and workboats, marine equipment), a general mechanical part (including e.g., industrial manufacturing machinery, heavy mobile machinery or equipment, installed equipment, industrial equipment product, fabricated metal product, tire manufacturing product), an electro-mechanical or electronic part (including e.g., consumer electronics, security and/or control and/or instrumentation products, computing and communication equipment, semiconductors, medical devices and equipment), a consumer good (including e.g., furniture, home and garden products, leisure goods, fashion products, hard goods retailers' products, soft goods retailers' products), a packaging (including e.g., food and beverage and tobacco, beauty and personal care, household product packaging).

According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, and PLM system.

By CAD solution, it is additionally meant any system, software of hardware, adapted at least for designing a modeled object on the basis of a graphical representation of the modeled object, such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g., non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA®. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA®.

As discussed above, the modeled object may be for example a finite element model which is a modeled object representing the mechanical product, and it may be associated with another modeled object representing the mechanical product, such as a CAD model. The finite element model may indeed be obtained from such a CAD model, for example using a meshing (i.e., triangulation) process. Conversely, the finite element model may be converted into a CAD model. The method may be for designing such a finite element model or a CAD model converted therefrom. The method may comprise providing an initial CAD model, and obtaining the finite element model of the inputs from the CAD model, and/or converting the updated finite element model back into a CAD model, thereby obtaining an updated CAD model. The finite element model may be a 3D finite element model and/or the CAD model may be a 3D CAD model. The method may thus be for designing a 3D modeled object representing the mechanical product.

The finite element model forms a discrete geometrical representation of a real-world object (e.g., a 3D real-world object), e.g., representing an object from the real world such as a mechanical product. The discrete geometrical representation is a data structure which comprises a discrete set of pieces of data. Each piece of data may specify an element of the finite element model, and be referred to as a discrete element. The finite element model may be 3D or alternatively 2D. The discrete geometrical representation may in examples comprise a number of such pieces of data higher than 100, 1000, or 10000.

In the case of a 3D finite element model, the 3D finite element model may be a solid 3D finite element model or a skin 3D finite element model. In other words, each piece of data may represent a respective geometrical entity positioned in a 3D space such that the pieces of data form a solid representation of the mechanical product (i.e., "solid 3D finite element model"). Each geometrical entity represents a respective location (i.e., a material point) of the 3D object (in other words, a respective portion of material constitutive of a solid represented by the 3D object). The aggregation (i.e., union or juxtaposition) of the geometrical entities represents altogether the 3D object. Alternatively, each piece of data may represent a respective geometrical entity positioned in a 3D space, such that the pieces of data form a representation of the mechanical product's skin (i.e., "skin 3D finite element model"). Each geometrical entity represents a respective location (i.e., a material point) on outer surface of the 3D object (in other words, a respective portion of outer surface of the volume occupied by material constitutive of a solid represented by the object). The aggregation (i.e., union or juxtaposition) of the geometrical entities represents altogether at least part of the outer surface of the object.

In the case of a 2D finite element model, each piece of data may represent a respective geometrical entity positioned in a 2D space. The finite element may be associated with one or more thickness value(s), for example a distribution of thickness value over its finite elements. Such a 2D finite element model may for example represent a generally planar product, such as a stamping part (e.g., with a constant thickness value) or a composite material part (e.g., with different thickness values).

The mechanical product designed by the method may be formed in one or more materials. In examples, the mechanical product may be formed in a single material (e.g., metal, or plastic), or in more than one material (e.g., a composite). Each of the one or more materials may have isotropic or anisotropic material properties.

The method comprises providing inputs. By "providing inputs" it is meant inputting said inputs to the method. The method may comprise providing inputs upon a user action (e.g., via a GUI or a keyboard) or via a configuration file read by the method.

The inputs include a finite element model representing the mechanical product and having an initial value of design variables (i.e., variables/parameters that specify the design of the mechanical product represented by the finite element model). As discussed above, the finite element model may comprise a finite element mesh, each geometrical entity being an element of the finite element mesh. The finite element mesh may be regular or irregular (i.e., consisting or not of elements of a same type). In examples, a solid 3D finite element model may comprise a 3D finite element mesh and a 2D finite element model or a 3D skin finite element model may comprise a 2D finite element mesh. The 2D finite element mesh or a skin may comprise one or more of triangular, rectangular, and generic polygonal elements. The 3D finite element mesh may comprise one or more of tetrahedral, hexahedral, and generic polyhedral elements. The finite element model has an initial value of design variables. In other words, the (i.e., each) finite element model is, at least partially, defined by setting said design variables to respective initial values. The design variables may comprise one or more of shape, bead, topology, sizing thicknesses, sizing angles, and beam sizing parameters. In examples where the finite element model comprises a finite element mesh, the design variables may be non-parametric, i.e., defined over and/or by said finite element mesh. For example, a design variable of shape may be defined by the finite element mesh, i.e., by the ensemble of coordinates of elements and/or nodes of the mesh. As another example, a design variable of sizing thickness may be defined over the finite element mesh, i.e., each element and/or node of the finite element mesh has (i.e., is linked to) a value for the design variable.

The inputs further include one or more load cases and, for each load case, a corresponding load history. A load case and its corresponding load history specify together a vector of a fixed orientation and direction and representing a force (thus in a Newton unit) at a fixed location of the FEM, of a time-dependent and potentially varying intensity (i.e., magnitude). For at least one (e.g., each) load case provided in the inputs, the magnitude may effectively be variable (i.e., presenting different values over time).

As known per se, a set of one or more real-world forces/loads exerted at the same time on a physical or real-world object (e.g., the mechanical product) may be divided into groups and each group may be represented by a so-called load-case. Each of the one or more load cases (partially) represents a set of real-world loads/forces (that act on said object) by a vector in direction of a sum of said set of real-world loads/forces and a location at which said sum of loads/forces are exerted on the object (e.g., a location respective to one or more elements of the finite element model or a finite element mesh said finite element model). In other words, the inputs include (digital) vectors (e.g., with units in Newtons or in a multiple thereof) each applicable and linked to a location of the finite element model (e.g., one or more finite elements of the FE mesh). The sum may be any vectorial sum of the loads/forces in the set. Each load case vector may be a unit vector. When there exist two or more load cases, they are not necessarily applied at the same time on the mechanical part and cannot accumulate/compensate each other. Industrial problems may involve a significant number of load cases, for example between 2 and 1000 load cases. In examples, the user may select via graphical user-interaction finite elements of the finite element model, and then specify a force applicable thereto.

The inputs further include, for each load case, a corresponding load history. Each corresponding load history is related (i.e., coupled) to a time-history of scalar values that are to be multiplied to the vector of the corresponding load case to the load history. By "history" in the load history it is meant a chronological sequence of such scalar values for each corresponding load case over a time interval (e.g., a minute, an hour, one day, one month, or one year). Said scalar value, at each time instant of the load history, represents a magnitude of the sum of the set of the forces/loads. Such a magnitude may represent the magnitude of the loads/forces represented by the load case. In other words, a load history present time behavior of a magnitude of a corresponding load case. In other words, each load case is scaled upon a respective scalar value of a respective time instant of the load history to represent the (vector of the) sum of the set of the forces/loads, both in direction and in magnitude.

Thereby, an ensemble of a load case and its corresponding load history fully represent (i.e., define) a respective history (i.e., time behavior) a set of real-world loads/forces that act on a physical or real-world object in such examples by a direction (according to the load case) and magnitude (according to the corresponding load history). In other words, the one or more load cases in combination with corresponding load history of each load case represent the (digital/virtual) forces/loads to which the mechanical product will be subject when used..

For example, when the mechanical product is a part of a wind turbine, such a load case may designate the direction of the wind force based on a wind profile in the geographical area of the turbine, while the corresponding load history represents the magnitude oscillation of said force in the direction presented by the load case.

A finite element model may experience different load cases at different times (for example, consider a building that is subjected to gusts of wind). Thus, a digital force in the associated data may represent several real-world forces applied to the physical object at a same time, i.e., a load case. However, such a load case may change in time as each of the several real-world forces change. Such a change produces the load history as discussed above.

Nevertheless, since a mechanical product may theoretically be subject to an infinite number of loads, not all loads are represented by the digital forces present in the inputs. The digital forces only represent a restriction of the whole set of loads, for example most significant ones and/or most representative ones. The digital forces may be determined for each modeling problem and may be chosen to be the largest (i.e., highest magnitude) real-world forces the object may be subject to during its lifetime, since these real-world forces tend to cause the largest deformations, mechanical stresses, and/or fatigue damage. For fatigue damage calculation the digital forces of the method may in particular represent the set of the loads most accumulated over time (e.g., according to a rainflow-counting). For example, a load which imposes high stresses in the mechanical product with low oscillation in time may be less significant in the fatigue calculation than a load imposing low stresses with high oscillation in time.

As a result, the total stresses (and forces) may be calculated at a given time by applying (e.g., a linear) superposition of stresses for the load cases using the scaling given by the time histories.

The inputs further include boundary conditions. A boundary condition is a constraint on the boundary of the finite element model. Each boundary condition applies and is linked to a finite element of the mesh and represents a respective constraint on the boundary to which the mechanical part is subject in use. In other words, each boundary condition represents the fact that material of the mechanical part at locations corresponding to said finite element is subject to a constraint on its displacement, for example using Dirichlet boundary conditions. An element may have its displacement constrained (among others) along a plane, along a curve, along/around an axis, or to/around a point, and/or its displacement may be constrained only in translation, only in rotation, or in both translation and rotation. In the case of a displacement constrained to a point both in translation and rotation, the element is fixed in 3D space and is said to be "clamped". An element may however have its displacement constrained in translation along a plane but move freely on said plane (e.g., if it belongs to an object mounted on a bearing), in translation along an axis but move freely on said axis (e.g., in a piston), or in rotation around an axis (e.g., joints of a robotic arm). In examples, the boundary conditions represent all the constrained boundaries. In other words, for each finite element which is intended to eventually contain material that is constrained (e.g., to remain fixed), a boundary (e.g., clamping) condition may be associated to integrate this fact. In examples, the user may select via graphical user-interaction finite elements of the finite element mesh, and then specify that boundary conditions are applicable thereto. In examples, the constrained boundaries of the mechanical product comprise or consist of one or more fixed boundaries (i.e., the material at said one or more boundaries cannot move), and the boundary conditions are clamping conditions.

In examples, the method may be used to improve the design of an already existing mechanical product. In such examples, forces and loads, may in general be obtained by mechanical tests, for example by measuring the value of a force applied on a mechanical product on a certain area. The method, then may comprise providing the one or more load cases and the corresponding load history of each load case based on such mechanical tests. Alternatively, the method may be used to design a mechanical product from scratch to be used under particular practical forces. In such examples, a user, e.g., a designer, may calculate said forces based on static or dynamic calculations, based on recommended values by design standards, or based on numerical simulations, as known in the field of engineering design. Such measured forces, then may be used as input load cases and load histories in inputs of the method seeking to design said mechanical product.

The inputs further include fatigue properties of the one or more materials. Said fatigue properties may comprise any mechanical property related to fatigue of the mechanical product as known in the field of mechanical engineering and materials science. As known *per se,* "fatigue" is the initiation and propagation of cracks in a material due to cyclic loading. Said mechanical properties may be related to stress and/or strain in the one or more materials under static or dynamic loading. For example, the fatigue properties of the one or more materials may comprise the Young's modulus and/or the Poisson's ratio of one of the one or more materials or any information allowing computation thereof, such as specifications of the material. The user may specify each of the one or more materials, for example by selection from a list, and/or the system may determine automatically the material parameters and/or propose selection thereof to the user, for example based on one or more formulas and/or on a database. The material can be any material, for example a solid and/or isotropic material, such as a metal (*e.g.*, steel, silver, gold, titanium), a plastic (nylon, ABS, polycarbonates, resins), a ceramic or a composite for example.

The fatigue properties of the one or more materials may comprise an S-N curve (i.e., a fatigue curve) of said one or more materials. As known *per se,* an S-N curve of a material describes a relation between cyclic stress and mean amplitudes on a mechanical part of said material and number of cycles to (mechanical) failure.

The inputs further include a fatigue calculation scheme. As known *per se* a fatigue calculation scheme calculates a fatigue life for a mechanical part (e.g., a mechanical product) subject to load cases. In other words, a fatigue calculation scheme computes damage and life on a mechanical part. Examples of fatigue calculation schemes are discussed hereinbelow.

The method further comprises computing a distribution of fatigue damage over the finite element model based on the inputs. The "fatigue damage" represents a lifetime or life duration of the mechanical product subject to the one or more cyclic loads (e.g., the one or more load case with fluctuations according to the corresponding load histories). In examples, such cyclic loads may be represented by cycle units (e.g., each cycle unit may be measured in seconds, minutes, hours, or days). The fatigue damage is due to a process of cycle-by-cycle accumulation of damage in a material undergoing fluctuating stresses (or strains) due to such fluctuating loads. In other words, fatigue damage may be an accumulated fatigue damage (i.e., summation of damage over the cycles). In such examples, the fatigue damage may be defined based on a fraction of life (in cycle unit, e.g., hours, or days) consumed (i.e., lost) by a stress cycle with a specific range. Alternatively, the fatigue damage may be an inverse of the number of cycles (e.g., before failure), corresponding to the one or more loads . By "computing a distribution of fatigue damage over the finite element model" it is meant computing a fatigue damage in attribution of the finite element model, for example computing a fatigue damage for each finite element mesh of the finite element model (e.g., for each integration point thereof). "Based on the inputs" means that the method takes into account the inputs, including the finite element model, the one or more load cases, the boundary conditions, the fatigue parameters of the one or more materials, and the fatigue calculation scheme.

The method further comprises updating the value of the design variables based on the fatigue damage sensitivities. "Updating the value of the design variables" means updating the value of at least one of the design variables. As discussed above, the provided finite element model has an initial value of the design variables and may be, at least partially, defined by setting the value said design variables. Thus, updating the value of at least one design variable may update the finite element model consequently. In examples, the design variables comprise coordinates respective to some location of the finite element model. Updating such coordinates leads to updating the geometry represented by the finite element model. The updating of the value of the design variables may be according to one or more technical criteria. In examples, the technical criteria may comprise a criterion on the value of the design variables. In examples that the design variables comprise coordinates, such a criterion may represent spatial constraints of the mechanical product to be used in practice (e.g., a maximum height or width of the product). Alternatively or additionally, the one or more technical criteria may comprise performance of the mechanical product. By "performance", it is meant a behavior of the mechanical product with respect to fatigue, e.g. mechanical performance. For example, the method may update the design variables so as to decrease the maximum deformation of the mechanical product (e.g., the maximum deformation over the mechanical product during the history of the load cases) and/or to decrease the fatigue damage of the mechanical product (e.g., a norm of the fatigue damage over the mechanical product). The update of the design variables may be according to an optimization (.e.g., maximizing or minimizing) of an objective function tending to improve such mechanical performance of the mechanical product. Such an optimization may be an iterative optimization as discussed below.

In examples, the method is (e.g., fully automatically) iterated so as to optimize performance of the mechanical product. Each iteration may comprise updating the finite element model based on the updated value of the design variables. In other words, at each iteration, the provided inputs are the same as in the previous iteration, with the sole exception that the finite element model has a value of the design variables which is the value obtained at the updating step of the previous iteration. Such iterations may be performed according to any known (e.g., fully automatic) iterative optimization method. Such an iterative optimization method may require an evaluation for an objective function, (e.g., an objective function comprising a fatigue damage), which may in turn require for an exact result an evaluation for a derivative of the said objective function, thus an evaluation of a derivative of fatigue damage. This may be proxied by an evaluation of the fatigue damage sensitivities. Integrating the method for designing a mechanical product in an iterative method further constitutes an improved solution by efficiently using computed fatigue sensitivities with known optimization methods in order to optimize the design variables.

Such an iterative method may continue iterations (and updating the finite element model) until one or more convergence criteria are satisfied. Such convergence criteria may include one or both of a relative/absolute change of a value of an objective function compared to a previous iteration, and/or a relative/absolute change of a value of design variables compared to a previous iteration. The objective function may be related to one or more structural or/and multiphysics solutions for an equilibrium of the finite element model, for example to a stress, deformation, or fatigue damage in the model. By "related" it is meant that the objective function has some (free) variables which are the variables of one or more structural or/and multiphysics solutions for an equilibrium of the finite element model. In other words, obtaining a convergence of the iterations with respect to the objective function results in providing values of the variables corresponding to such an equilibrium. In examples, the objective function may be such that upon the convergence (and respective update of the design variables of the finite element model) a stress value, a maximum deformation, and/or a maximum fatigue damage over the finite element model is minimized.

As previously discussed, designing the mechanical product by obtaining a respective optimized finite element (or CAE) model allows to assist design processes and manufacturing processes, whereby the objective is to produce a mechanical product corresponding to the designed model. Within this content, the finite element model is a model which represents the mechanical product that may be manufactured downstream to its design for example upon a conversion to a respective CAD model. The method may thus be part of such a design and/or manufacturing process and used to obtain a finite element model of the mechanical product by updating the design variables of a(n initial) finite element model based on the computed fatigue damage sensitivities. As discussed above, the method may convert such an updated finite model into a respective CAD model. Such an update process may be an iterative process as discussed above. Said design and/or manufacturing process may use the final finite element model or the converted CAD model thereof in further steps of design and/or edition actions, tests, simulations and/or manufacturing. The method may in other words be included in a manufacturing CAE process, at a step where the CAE model of a mechanical product is obtained and/or where the design variables of the CAE model are determined. The manufacturing process may comprise, after performing the method, producing a physical product corresponding to the modeled object. The method may be included in many other applications which use the models and/or design variables obtained by the method.

It is further proposed such a production process comprising designing a mechanical product by performing the design method, and producing the mechanical part. The design method may provide a finite element model (i.e., a CAE model) as the final output. The production process may use such an output to obtain a CAD model of the designed mechanical product which can be fabricated by known fabrication methods. The production of the mechanical product may comprise any known fabrication step, for example one or more additive manufacturing steps, one or more cutting steps (e.g. laser cutting or plasma cutting steps), one or more stamping steps, one or more forging steps, one or more molding steps, one or more machining steps (e.g. milling steps) and/or one or more punching steps. Because the design method improves the design of a finite element model representing a mechanical product, the production method also improves the manufacturing of the mechanical product and thus increases productivity of the manufacturing process (i.e., production process).

In examples of such a production process, the design method is first (e.g., fully automatically) iterated so as to optimize performance of the mechanical product to be fabricated. By "optimize" it is meant updating the design variables in the iterative manner such that to, e.g., optimize maximize or minimize a value of an objective function. Such an objective function tends to penalize a mechanical performance of the mechanical product as discussed above. In examples, the objective function may tend to (at least significantly) penalize a norm (e.g., a maximum norm) of a distribution of fatigue damage over the mechanical product (or the finite element model thereof), for example upon optimization constraints, and the optimized output of the iterations is a finite element model of a mechanical product with maximum fatigue damage life up to the optimization constraints. Such an optimized mechanical product is represented by a final updated finite element model thereof. Such a finite element model may (e.g., fully automatically, by any known fully automated CAE-to-CAD model conversion process/algorithm) be converted into a CAD model after the iterations, for example at the (beginning of the) producing step of the production process. The production process may then import such a CAD model (e.g., fully automatically) into a CAD manufacturing process to fabricate the mechanical product. Such an imported CAD model at least significantly corresponds to such a mechanical product to be fabricated by the CAD manufacturing process. In other words, the imported CAD model may be subject to further editing after the conversion of the final updated finite element model with respect to fabrication criteria, for example milling direction or molding constraints, and/or finishing or fitting tolerances. However, the imported CAD model (and the manufactured mechanical product thereof) corresponds to the inputs of the method including, e.g., boundary conditions and load cases and has similar fatigue life according to the computed values of the method.

The production process may thus comprise the following sequence of steps:

- (e.g. automatically) applying the method, thereby obtaining said updated finite element model;
- (e.g. automatically) converting the obtained finite element model into a CAD model as previously discussed;
- optionally (i.e. depending on the manufacturing process used, the production of the mechanical product may or may not comprise this step) (e.g. automatically) determining a production file and/or CAM file based on the CAD model, for production/manufacturing of the manufacturing product;
- (*e.g.* automatically) producing/manufacturing, based on the determined production file or on the CAD model, the mechanical product originally represented by the finite element model.

Converting the finite element model into a CAD model may comprise executing the following (e.g. fully automatic) conversion process that takes as input a finite element model and converts it into a CAD model comprising a feature-tree representing the modeled mechanical product. The conversion process includes the following steps (where known fully automatic algorithms exist to implement each of these steps):

- segmenting the finite element model, or an outer surface/skin thereof, thereby obtaining a segmentation of the finite element model into segments, e.g. each forming a surface portion of the model;
- detecting geometries of CAD features by processing the segments, e.g. including detecting segments or groups of segments each forming a given CAD feature geometry (e.g. an extrusion, a revolution, or any canonic primitive), and optionally geometric characteristics thereof (e.g. extrusion axis, revolution axis, or profiles);
- parameterizing the detected geometries, e.g. based on the geometries and/or on said geometric characteristics thereof;
- fitting CAD operators each to a respective portion of the finite element model, based on a geometry of said portion, for example by aggregating neighboring segments detected as being part of a same feature geometry;
- encoding the geometries and the corresponding CAD operators into a feature tree;
- optionally, executing the feature tree, thereby obtaining a B-rep representation of the product;
- outputting the feature tree and optionally the B-rep, the feature tree and optionally the B-rep forming the CAD model.

The production file may comprise a manufacturing step up model obtained from the CAD model. The manufacturing step up may comprise all data required for manufacturing the mechanical product so that it has a geometry and/or a distribution of material that corresponds to what is captured by the CAD model, possibly up to manufacturing tolerance errors. Determining the production file may comprise applying any CAM (Computer-Aided Manufacturing) solution for (e.g. automatically) determining a production file from the CAD model (e.g. any automated CAD-to-CAM conversion algorithm).

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA®.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:

- checking the correct behavior of the object to be manufactured in a specific environment; and
- ensuring the manufacturability of the object to be manufactured.

The mechanical product may be an additive manufacturable part, *i.e.* a part to be manufactured by additive manufacturing (i.e. 3D printing). In this case, the production process does not comprise the step of determining the production file and directly proceeds to the producing/manufacturing step, by, further to the conversion of the finite element model into the CAD model, directly and automatically feeding a 3D printer with the CAD model. 3D printers are configured for, upon being fed with a CAD model representing a mechanical product, directly and automatically 3D print the mechanical product in accordance with the CAD model. In other words, the 3D printer receives the CAD model, which is automatically fed to it, automatically reads the CAD model, and automatically manufactures the mechanical part by adding together material, e.g. layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing process may comprise determining automatically from the CAD model, determining a printing direction, for example to minimize overhang volume (such as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The mechanical product may alternatively be a machined part (*i.e.* a part manufactured by machining), such as a milled part (*i.e.* a part manufactured by milling). In such a case, the production process may comprise a step of determining the production file. This step may be carried out automatically, by any suitable CAM solution to automatically obtain a production file from a CAD model of a machined part. The determination of the production file may comprise automatically checking if the CAD model has any geometric particularity (*e.g.* error or artefact) that may affect the manufacturing process and automatically correcting such particularities. For example, machining or milling based on the CAD model may not be carried out if the CAD model still comprises sharp edges (because the machining or milling tool cannot create sharp edges), and in such a case the determination of the production file may comprise automatically rounding or filleting such sharp edges (*e.g.* with a round or fillet radius that corresponds, *e.g.* substantially equals up to a tolerance error, the radius of the cutting head of the machining tool), so that machining or milling based on the CAD model can be done. More generally, the determination of the production file may automatically comprise rounding or filleting geometries within the CAD model that are incompatible with the radius of the machining or milling tool, to enable machining/milling. Further to the check, the determination of the production file may comprise automatically determining the machining or milling path, *i.e.* the path to be taken by the machining tool to machine the product. The path may comprise a set of coordinates and/or a parameterized trajectory to be followed by the machining tool for machining, and determining the path may comprise automatically computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2013 by Dassault Systèmes, and which is incorporated herein by reference. It is to be understood that the path may be a single path, e.g. that the tool continuously follows without breaking contact with the material to be cut. Alternatively, the path may be a concatenation of a sequence sub-paths to be followed in a certain order by the tool, e.g. each being continuously followed by the tool without breaking contact with the material to be cut. Optionally, the determination of the production file may then comprise automatically setting machine parameters, including cutting speed, cut/pierce height, and/or mold opening stroke, for example based on the determined path and on the specification of the machine. Optionally, the determination of the production file may then comprise automatically configuring nesting where the CAM solution decides the best orientation for a part to maximize machining efficiency. In this case of a machining or milling part, the determining of the production file thus results, and outputs, a file comprising a machining path, and optionally the set machine parameters and/or specifications of the configured nesting. This outputted file may be then (*e.g.* directly and automatically) fed to the machining tool and/or the machining tool may then (*e.g.* directly and automatically) be programmed by reading the file, upon which the production process comprises the producing/manufacturing step where the machine performs the machining of the product according to the production file, *e.g.* by directly and automatically executing the production file. The machining process comprises the machining tool cutting a real-world block of material to reproduce in the geometry and/or distribution of material captured by the CAD model, *e.g.* up to a tolerance error (*e.g.* tens of microns for milling).

The mechanical product may alternatively be a molded part, *i.e.* a part manufactured by molding (*e.g.* injection-molding). In such a case, the production process may comprise the step of determining the production file. This step may be carried out automatically, by any suitable CAM solution to automatically obtain a production file from a CAD model of a molded part. The determining of the production file may comprise automatically performing a sequence of molding checks based on the CAD model to check that the geometry and/or distribution of material captured by the CAD model is adapted for molding, and automatically performing the appropriate corrections if the CAD model is not adapted for molding. The checks may include: verifying that the virtual product as represented by the CAD model is consistent with the dimensions of the mold and/or verifying that the CAD model comprises all the draft angles required for demolding the product, as known *per se* from molding. The determining of the production file may then further comprise determining, based on the CAD model, a quantity of liquid material to be used for molding, and/or a time to let the liquid material harden/set inside the mold, and outputting a production file comprising these parameters. The production process then comprises (*e.g.* automatically) performing the molding based on the outputted file, where the mold shapes, for the determined hardening time, a liquid material into a shape that corresponds to the geometry and/or distribution of material captured by the CAD model, *e.g.* up to a tolerance error (*e.g.* up to the incorporation of draft angles or to the modification of draft angles, for demolding).

The mechanical product may alternatively be a stamped part, also possibly referred to as "stamping part", *i.e.* a part to be manufactured in a stamping process. The production process may in this case comprise automatically determining a production file based on the CAD model. The CAD model represents the stamping part, e.g. possible with one or more flanges if the part is to comprise some, and possibly in this latter case with extra material to be removed so as to form an unfolded state of one or more flanges of the part. The CAD model thus comprises a portion that represents the part without the flanges (which is the whole part in some cases) and possibly an outer extra patch portion that represents the flanges, with possibly the extra material (if any). This extra patch portion may present a g2-continuity over a certain length and then a g1-continuity over a certain length. The determination of the production file may automatically comprise determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the production file may also comprise determining a corresponding machining production file, e.g. as discussed previously. If there are one or more flanges, determining the production file may comprise determining geometrical specifications of the g2-continuity and g1-continuity portions that allow, after the stamping itself and the removal of the extra material, to fold in a folding process the flanges towards an inner surface of the stamped part and along the g2-continuity length. The production file thereby determined may thus comprise: parameters of the stamping tool, optionally said specifications for folding the flanges (if any), and optionally a machining production file for removing the extra material (if any). The production process may then output, *e.g.* directly and automatically, the file, and perform the stamping process (*e.g.* automatically) based on the file. The stamping process may comprise stamping (*e.g.* punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The CAD model may be feature-based (*e.g.* it may comprise in a feature tree, and optionally a corresponding B-rep obtained by executing the feature tree). A feature-based 3D model allows (*e.g.* during the determining of the production file) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (*e.g.* at the step of determining a production file) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

The generation of a custom computer program from CAD files may be automated. Such generation may therefore be error prone and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D designs.

The B-rep (i.e. boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g. a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep doesn't contain any history-based information.

In examples, the computing of the distribution of fatigue damage over the finite element model based on the inputs comprises computing one or more distributions of stress over the finite element model each corresponding to a respective load case. Said computing further comprises, for each computed distribution of stress, computing a distribution of fatigue damage parameter over the finite element model using the fatigue calculation scheme and based on the fatigue properties of the one or more materials. In such examples, the computing of the distribution of fatigue damage over the finite element model is based on the computed distribution of a fatigue damage parameter and the load history of each of the one or more load cases.

The computing distribution of fatigue damage parameter over the finite element model may comprise, for each computed distribution of stress, computing one or more stresses and/or one or more strains corresponding to the computed distribution of stress according to the fatigue calculation scheme. The fatigue calculation scheme may comprise any of a Brown-Miller function, a Von-Mises function, a signed Von-Mises function, a Normal stress function, a Normal strain function. Alternatively, the fatigue calculation scheme may comprise a user-defined function. Said user-defined function may be any function able to compute a physically meaningful fatigue damage parameter based on stress and/or strain applied to the mechanical part over time. This improves the fatigue damage computation as the method is able to use a fatigue damage calculation scheme appropriate to the inputs, for example comprising a function most appropriate to the properties of the one or more materials.

In examples, the computing of the distribution of fatigue damage further comprises a critical plane analysis and/or rainflow-counting based on the load history of each of the one or more load cases. Critical plane analysis assesses fatigue damage on critical planes, i.e., the planes with the highest damage. Such planes are also referred to as cut planes. Critical plane analysis is a method widely used in industry for practical applications, thereby the method may be efficiently used for such purposes. Rainflow-counting is a method to efficiently extract one single damage value from a load case in correspondence to a history (e.g., time series). Such a load case as discussed above may be a linear superposition of the one or more load cases wherein each load case is scaled by a coefficient according to the corresponding load history.

The method further comprises computing a distribution of sets of fatigue damage sensitivities over the finite element model based on the computed distribution of fatigue damage. Each fatigue damage sensitivity of each set approximates a derivative of the fatigue damage (corresponding to a location of the finite element model) relative to a respective design variable. Each set of fatigue damage sensitivities (corresponding to a location of the finite element model) may consist of an ensemble of the approximations of derivatives of the fatigue damage (corresponding to the location of the finite element model) relative to a set of design variables.

In examples, each fatigue damage discussed above is a function of the design variables and one or more stresses each applied by one of the one or more load cases. Each stress may be represented by a distribution of a tensor of stress, (e.g., a Cauchy tensor) over the finite element model and may be a function of a respective load case of the one or more load cases and the design variables, for example a surface area of the mechanical product. Further, the computing of the distribution of sets of fatigue damage sensitivities may comprise, for each fatigue damage sensitivity, computing terms each representing an approximation of a partial derivative of the fatigue damage relative to each respective stress. Such an approximation computation of a partial derivative of the fatigue damage relative to each respective stress is "locally" compatible, thereby being computationally efficient. In other words, for the approximation of a partial derivative of the fatigue damage relative to each respective stress at each location of the finite element model, the method does not solve a global problem which is computationally costly. Instead, the method computes such approximation independently for each location, and this improves the computational performance.

In examples, each said computed term may consist of finite difference approximations of the partial derivative of the fatigue damage each relative to a stress component of the respective stress. Such finite difference approximation may be computed by any known method in the field. For example, the method may compute each of the finite difference approximations by introducing one or more variations to the respective stress at a location of the finite element model and computing respective fatigue damage for each of the one or more variations. As discussed above, computing respective fatigue damage for each of the one or more variations is a local problem, i.e., solvable at each location of the finite element model, thereby cheap to compute.

The finite difference approximation may consist of a backward finite difference approximation, a forward finite difference approximation, a central finite difference approximation, or a complex step approximation. These approximations are known in the field. For example, the method may apply the complex step approximation using the method presented in Tortorelli and Michaleris, "Design sensitivity analysis: Overview and review.", Inverse Problems in Engineering 1 (1994): 71-105.

In examples, each fatigue damage sensitivity consists of a sum of an approximation of a partial derivative of the fatigue damage relative to the respective design variable, and a multiplication of the approximation of the partial derivative of the fatigue damage relative to each stress, by a derivative of the stress relative to the respective design variable.

In first examples, which may be equivalently referred to as "direct method", the computing of the distribution of sets of fatigue damage sensitivities may comprise, for each fatigue damage sensitivity, summing the approximation of the partial derivative of the fatigue damage relative to the respective design variable, and the multiplication of the approximation of the partial derivative of the fatigue damage relative to each stress, by a derivative of the stress relative to the respective design variable.

In second examples, which may be equivalently referred to as "adjoint method", the computing of the distribution of sets of fatigue damage sensitivities may comprise, for each fatigue damage sensitivity, summing the computed approximation of the partial derivative of the fatigue damage relative to the respective design variable, the approximation of the partial derivative of the fatigue damage relative to each stress multiplied by a partial derivative of said stress relative to the respective design variable, and an inner product between a derivative of a residual relative to the respective design variable and an approximation of an adjoint variable. The adjoint variable is a solution of a linear system of equation, the linear system having a coefficient matrix. The coefficient matrix consists of a partial derivative of the residual relative to a deformation as and right-hand side comprising a multiplication of the approximation of the partial derivative of the fatigue damage relative to each stress by a partial derivative of said stress relative to the deformation. The residual may be a structural residual which is zero for structural equilibrium, i.e., the equilibrium between the internal forces and external forces.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

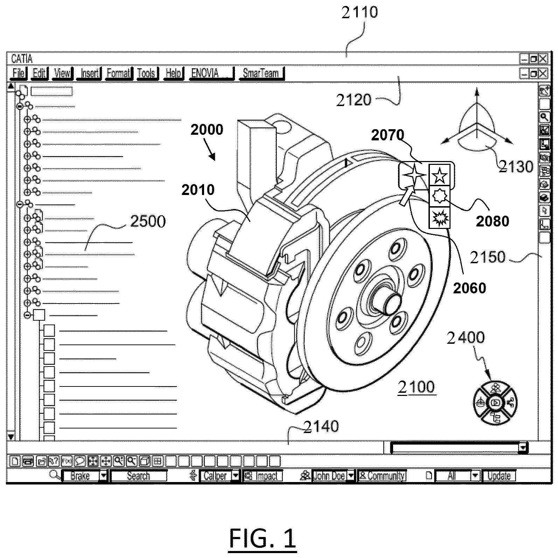

FIG. 1 shows an example of the GUI of the system, wherein the system is a CAD system.

The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g., change the dimension, color, etc.) or edit geometrical constraints by selecting an appropriate icon. For example, typical CAD operations are the modeling of the punching, or the folding of the 3D modeled object displayed on the screen. The GUI may for example display data 2500 related to the displayed product 2000. In the example of the figure, the data 2500, displayed as a "feature tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

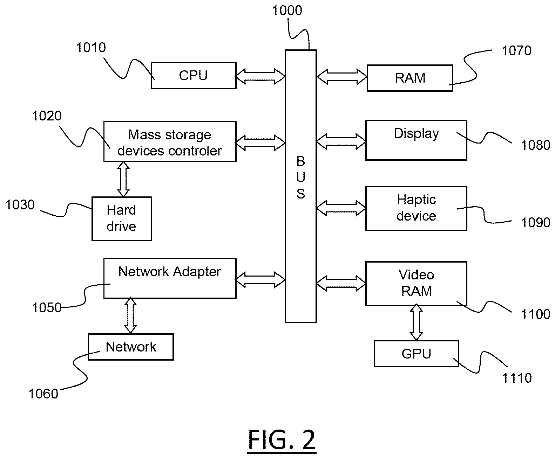

FIG. 2 shows an example of the system, wherein the system is a client computer system, *e.g.*, a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

Implementations of the methods are now discussed.

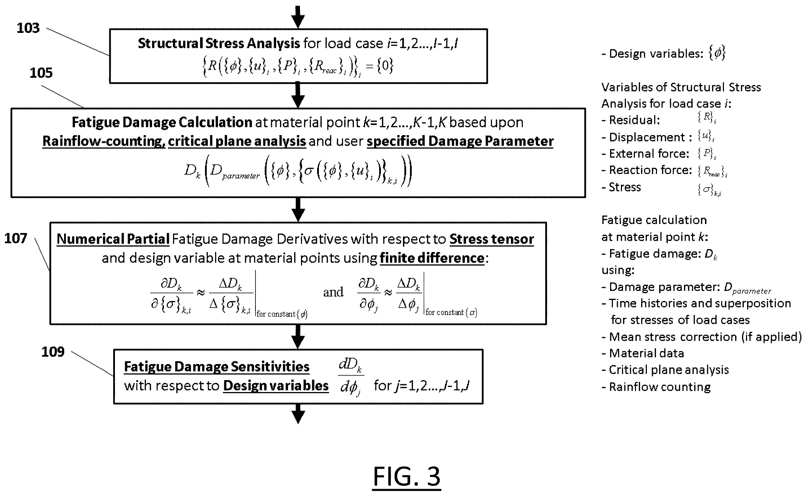

FIG. 3 shows a general framework of the implementations of the method. Such a workflow comprises, at step 103, a structural stress analysis based on the inputs (including the one or more load cases). Such an analysis computes one or more distributions of stress over the finite element model each corresponding to a respective load case. The workflow further comprises, at step 105, computing a (distribution of) fatigue damage. Such a computing is performed for each computed stress distribution by using a fatigue calculation scheme. The fatigue calculation scheme may comprise one or more of a damage parameter function, a critical plane algorithm, mean stress correction, and rainflow-counting each may be specified by a user or set by default based on the fatigue properties of the material. For example, in examples where the material of the mechanical product is a brittle material, the implementations may set automatically a damage parameter function which suits such material. Furthermore, at step 109, the implementations derive practical and reliable fatigue damage sensitivities (i.e., compute a distribution of sets of fatigue damage sensitivities) with respect to the design variable using numerical partial fatigue damage derivatives with respect to stress tensor of step 107. The naive workflow presented of FIG. 3 may obtain a fatigue damage $D_k$ value which is not (analytically) differentiable in the mathematical sense, thereby not being possible to compute the fatigue damage derivative analytically. Hence, the implementations determine, at step 107, the partial derivatives in a numerical way suitable for engineering applications in order to compute the fatigue damage sensitivities at step 109. The obtaining of numerical derivatives by using numerical finite difference techniques provides numerically accurate and consistent partial derivatives for the fatigue damage sensitivities with respect to stress tensor. Thereby, this enables the computations of the sensitivities for the fatigue damage $D_k$ with respect to various design variables numerically at step 109 which are also numerically accurate and consistent. The computed stresses of step 103 and the computed fatigue damage of step 104 may be used in any of steps 107 and/or 109. The implementations may then use the fatigue damage sensitivities in optimization schemes and workflows.

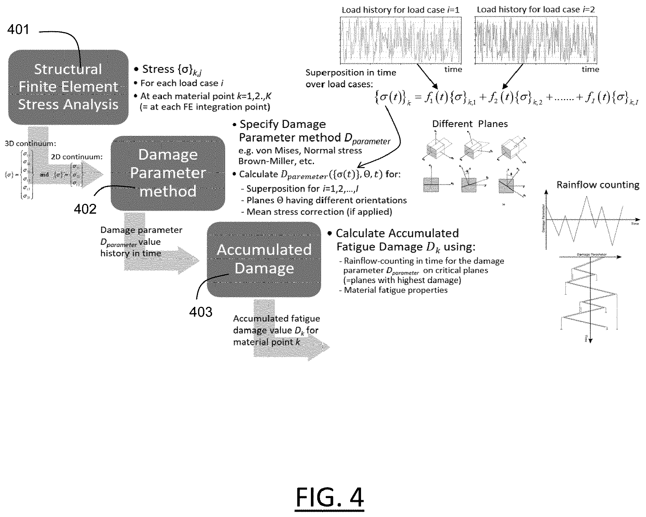

FIG. 4 shows example steps 103 and 105 of FIG. 3 in more detail. Such an example consists of obtaining stresses from a structural analysis; typically, a finite element analysis at step 401. Then, at step 402, the method may specify a damage parameter function automatically or defined by the user. The damage parameter function may be, for example, a Brown-Miller function, Normal Strain function, Normal Stress function, Von-Mises Stress function, Signed Von-Mises Stress function, or any other known function in the field. In this step, the implementations may calculate damage parameters $D_{parameter}$ for different orientated planes at material points using superposition for stresses with respect to the transient load histories for the multiple load cases. The implementations may also apply mean stress corrections, if, for example, requested by user. Then, at step 403, the implementations calculate accumulated fatigue damage $D_k$ using rainflow-counting in time for the critical planes, i.e., critical plane analysis. The material fatigue properties for calculating the accumulated fatigue damage $D_k$ may be provided using S-N curves or similar fatigue characteristics determined by physical experiments or obtained from existing databases.

Examples discussed below show how to calculate the adjoint or direct sensitivities $dD_k/d\phi_j$ of the fatigue damage $D_k$ with respect to a given design variable $\phi_j$. Computing fatigue damage sensitivities may comprise an approximation of a total damage derivative of the fatigue damage. The total damage derivative of the fatigue damage, unlike partial derivatives, comprises derivative of the fatigue damage with respect to all of its arguments, not just a single one. The index k is for a given material point (belong to a finite element model) where k=1,2...,K-1,K (where K may be the number of integration points or selected points at the elements of the finite element) and the index j is for a given design variable for j=1,2, ..., J-1,J (where J is the number of the design variables), respectively. The number (and respective locations) of the integration points or the selected points may be set at the beginning of the method (e.g., upon the step of the providing finite element model) depending on the type of the elements of the finite element model (and the finite element mesh thereof), e.g., for tetrahedral or hexagonal elements and according to any known method in the field. In examples, the selected points may be the centroid points of each element.

The implementations may derive the fatigue damage sensitivities $dD_k/d\phi_j$ of the fatigue damage $D_k$ with respect to a design variable $\phi_j$ by approximating the numerical partial derivatives $\partial D_k/\partial\{\sigma\}_{k,i} \approx \Delta D_k/\Delta\{\sigma\}_{k,i}$ using finite difference for the fatigue damage calculation with respect to stress tensor $\{\sigma\}_{k,i}$ for fatigue damage sensitivities. The fatigue damage parameter $D_k$ is the fatigue damage at location (i.e., material point) $k$ and is a function of the fatigue damage parameter $D_{parameter}$ which is itself a function of a respective stress tensor at location $k$. The fatigue damage parameter $D_{parameter}$ by itself is a function of the (set of) design variables $\{\phi\}$ and the (set of) stress tensors $\{\sigma\}_{k,i}$ of each of the one or more load cases $i$ at location k which is a function of the (set of) design variables $\{\phi\}$, and the (set of) displacements $\{u\}_{k,i}$. In other words, the fatigue damage $D_k$ may be written as the following equation

$$(1) \qquad D_k\left( D_{parameter}\left( \{\phi\}, \left\{\sigma\left(\{\phi\},\{u\}_{k,i}\right)\right\}_{k,i}\right)\right)$$

Thereby, the derivative $\dfrac{dD_k}{d\phi_j}$ of the fatigue damage $D_k$ relative to the design variable $\phi_j$ is

$$(2) \qquad \frac{dD_k}{d\phi_j} = \frac{\partial D_k}{\partial D_{parameter}}\left( \frac{\partial D_{parameter}}{\partial \phi_j} + \sum_{i=1}^{I}\left( \frac{\partial D_{parameter}}{\partial \{\sigma\}_{k,i}}\left( \frac{\partial \{\sigma\}_{k,i}}{\partial \phi_j} + \frac{\partial \{\sigma\}_{k,i}}{\partial \{u\}_i}\frac{d\{u\}_i}{d\phi_j}\right)\right)\right)$$

$$= \frac{\partial D_k}{\partial D_{parameter}}\frac{\partial D_{parameter}}{\partial \phi_j} + \sum_{i=1}^{I}\left( \frac{\partial D_k}{\partial D_{parameter}}\frac{\partial D_{parameter}}{\partial \{\sigma\}_{k,i}}\left( \frac{\partial \{\sigma\}_{k,i}}{\partial \phi_j} + \frac{\partial \{\sigma\}_{k,i}}{\partial \{u\}_i}\frac{d\{u\}_i}{d\phi_j}\right)\right)$$

where $\partial$ denotes a partial derivative. The terms $\dfrac{\partial D_k}{\partial D_{paramter}}\dfrac{\partial D_{paramter}}{\partial \phi_j}$ and $\dfrac{\partial D_k}{\partial D_{paramter}}\dfrac{\partial D_{paramter}}{\{\sigma\}_{k,i}}$ are equal to $\dfrac{\partial D_k}{\partial \phi_j}$ and $\dfrac{\partial D_k}{\partial\{\sigma\}_{k,i}}$, respectively.

The implementations may compute the derivative $dD_k/d\phi_j$ of the fatigue damage $D_k$ with respect to a design

variable $\phi_j$ by approximating the numerical partial derivatives $\dfrac{\partial D_k}{\partial \{\sigma\}_{k,i}} \approx \dfrac{\Delta D_k}{\Delta \{\sigma\}_{k,i}}$ and $\dfrac{\partial D_k}{\partial \phi_j} \approx \dfrac{\Delta D_k}{\Delta \phi_j}$ (e.g., using finite differences) thereby obtaining equation (3) as

$$\left.\frac{\Delta D_k}{\Delta \phi_j}\right|_{\text{for constant }\{\sigma\}} + \sum_{i=1}^{I} \left( \left.\frac{\Delta D_k}{\Delta \{\sigma\}_{k,i}}\right|_{\text{for constant }\{\phi\}} \left( \frac{\partial \{\sigma\}_{k,i}}{\partial \phi_j} + \frac{\partial \{\sigma\}_{k,i}}{\partial \{u\}_i} \frac{d\{u\}_i}{d\phi_j} \right) \right)$$

Frequently, the term $\dfrac{\Delta D_k}{\Delta \phi_j}$ in equation (3) may be zero as the fatigue damage $D_k$ is not a function of the design variables $\{\phi\}$ for a constant stress. In the above formula, the derivative $\dfrac{d\{u\}_i}{d\phi_j}$ of the displacement to the design variables may be obtained by any known adjoint or direct method as discussed below. In particular, the implementations may use adjoint methods as these methods are less computationally costly in cases with many design variables (e.g., sizing, topology, shape, and bead).

Thus, the implementations compute a practical and realistic approximation of $\dfrac{dD_k}{d\phi_j}$ by $\dfrac{\Delta D_k}{\Delta \phi_j}$ for engineering applications. The implementations may calculate the approximation $\dfrac{\Delta D_k}{\Delta \phi_j}$ by a finite difference in the stresses per load case $i$ e.g., using forward, backward or central finite difference as below

$$\text{Forward finite difference:} \quad \left.\frac{\Delta D_k}{\Delta (\sigma_{mn})_{k,i}}\right|_{\text{for constant }\{\phi\}} \approx \frac{D_k\left((\sigma_{mn})_{k,i} + \Delta(\sigma_{mn})_{k,i}\right) - D_k\left((\sigma_{mn})_{k,i}\right)}{\Delta(\sigma_{mn})_{k,i}}$$

$$\text{Backward finite difference:} \quad \left.\frac{\Delta D_k}{\Delta (\sigma_{mn})_{k,i}}\right|_{\text{for constant }\{\phi\}} \approx \frac{D_k\left((\sigma_{mn})_{k,i} - \Delta(\sigma_{mn})_{k,i}\right) - D_k\left((\sigma_{mn})_{k,i}\right)}{-\Delta(\sigma_{mn})_{k,i}}$$

$$\text{Central finite difference:} \quad \left.\frac{\Delta D_k}{\Delta (\sigma_{mn})_{k,i}}\right|_{\text{for constant }\{\phi\}} \approx \frac{D_k\left((\sigma_{mn})_{k,i} + \Delta(\sigma_{mn})_{k,i}\right) - D_k\left((\sigma_{mn})_{k,i} - \Delta(\sigma_{mn})_{k,i}\right)}{2\Delta(\sigma_{mn})_{k,i}}$$

where $(\sigma_{mn})_{k,i}$, $m = 1,...,3, n = 1,...,3$ denotes components of the stress tensor for the location $k$ and the load case $i$, and $\Delta(\sigma_{mn})_{k,i}$ is a variation of said component. The implementations may apply forward finite difference using $\Delta(\sigma_{mn})_{k,i} = 0.01\ (\sigma_{mn})_{k,i}$ or $\Delta(\sigma_{mn})_{k,i} = 0.001\ (\sigma_{mn})_{k,i}$.

The implementations may use a compact version of the stress tensors, i.e., in 2D models, $\{\sigma\}=\{\sigma mn\}=\{\sigma 11, \sigma 22, \sigma 12\}$ and in 3D models, $\{\sigma\}=\{\sigma mn\}=\{\sigma 11, \sigma 22, \sigma 33, \sigma 12, \sigma 13, \sigma 23\}$. Then, the number of finite differences in 2D per material point k is 3 x I and the number of finite differences in 3D per material point k is 6 × I. Thus, the computational performance in runtime is efficient as well as the fatigue calculations for the finite differences can be done simultaneously using parallel running calculations.

The implementations provide a semi-analytical fatigue damage sensitivity approach for both adjoint and direct sensitivities. Such implementations are feasible for engineering and industrial fatigue damage applications, are the most general approach for adjoint fatigue damage sensitivities compared to the academic literature and software from competitors, and support fatigue damage sensitivity calculation for all typical industrial fatigue modeling features. Furthermore, such implementations provide a non-intrusive numerical implementation approach for the fatigue code, support both adjoint and direct sensitivity implementations. In addition, the fatigue damage sensitivities computed by the implementations are applied in an iterative optimization workflow based upon sensitivities and mathematical programming for obtaining improved structural design.

In particular, the implementations of the adjoint method based on the numerical partial derivatives for the fatigue damage calculation with respect to the stress tensor for fatigue damage sensitivities obtain numerically accurate and consistent partial derivatives for the fatigue damage sensitivities with respect to stress tensor using a finite difference. Such implementations are not intrusive implementation-wise. In other words, such implementations require minimum (if any) any software modifications for the fatigue sensitivity calculation. Such implementations support all non-parametric optimization design variable types, e.g., non-parametric shape, bead, topology, sizing thicknesses, sizing angles, beam sizing parameters and similar non-parametric design variable types, all damage parameter functions(e.g., Brown-Miller, Normal Stress, Von Mises, Signed Von Mises, or a user-defined). In addition, such implementations support fatigue rainflow-counting, mean stress corrections, multiple load cases and load time histories for fatigue calculations, critical planes for the fatigue damage calculations. Fatigue damage calculation using critical planes is the most common fatigue damage calculation approach for industrial applications. Such implementations have efficient computational performance in runtime.

Implementations using an adjoint method are now discussed. Such implementations compute the fatigue damage sensitivity as discussed above in equation (1) using a set of Lagrange multipliers as below in equation (4)

$$
D_k\left(D_{parameter}\left(\{\phi\},\left\{\sigma\left(\{\phi\},\{u\}_{k,i}\right)\right\}_{k,i}\right)\right) = D_k\left(D_{parameter}\left(\{\phi\},\left\{\sigma\left(\{\phi\},\{u\}_i\right)\right\}_{k,i}\right)\right) + \sum_{i=1}^{I}\left(\{\lambda\}_i^T\left\{R\left(\{\phi\},\{u\}_i,\{P\}_i,\{R_{reac}\}_i\right)\right\}_i\right)
$$

$$
= D_k\left(D_{parameter}\left(\{\phi\},\left\{\sigma\left(\{\phi\},\{u\}_{k,i}\right)\right\}_{k,i}\right)\right) + \sum_{i=1}^{I}\left(\begin{Bmatrix}\{\lambda\}_{i,F}\\\{\lambda\}_{i,R}\end{Bmatrix}^T\begin{Bmatrix}\left\{R_{i,F}\left(\{\phi\},\{u\}_i,\{P\}_i\right)\right\}_i\\\left\{R_{i,R}\left(\{\phi\},\{u\}_i,\{P\}_i,\{R_{reac}\}_i\right)\right\}_i\end{Bmatrix}\right)
$$

where $\{\lambda\}_i$ is the set of Lagrange multiplier, $\{\lambda\}_i^T$ denotes a transpose of such set, $\{R\}_i$ is a set of residuals, $\{P\}_i$ is a set of external forces, and $\{R_{reac}\}_i$ is a set of reaction forces.

Using the equations (2) and (4) yields

$$
\frac{dD_k}{d\phi_j} = \frac{\partial D_k}{\partial D_{parameter}}\frac{\partial D_{parameter}}{\partial \phi_j} + \sum_{i=1}^{I}\left(\frac{\partial D_k}{\partial D_{parameter}}\frac{\partial D_{parameter}}{\partial\{\sigma\}_{k,i}}\left(\frac{\partial\{\sigma\}_{k,i}}{\partial\phi_j} + \frac{\partial\{\sigma\}_{k,i}}{\partial\{u\}_i}\frac{d\{u\}_i}{d\phi_j}\right)\right)
$$

$$
+ \sum_{i=1}^{I}\left(\begin{Bmatrix}\{\lambda\}_{i,F}\\\{\lambda\}_{i,R}\end{Bmatrix}^T\begin{Bmatrix}\dfrac{\partial\{R\}_{i,F}}{\partial\phi_j} + \dfrac{\partial\{R\}_{i,F}}{\partial\{u\}_i}\dfrac{d\{u\}_i}{d\phi_j} + \dfrac{\partial\{R\}_{i,F}}{\partial\{P\}_i}\dfrac{d\{P\}_i}{d\phi_j}\\[1em]\dfrac{\partial\{R\}_{i,R}}{\partial\phi_j} + \dfrac{\partial\{R\}_{i,R}}{\partial\{u\}_i}\dfrac{d\{u\}_i}{d\phi_j} + \dfrac{\partial\{R\}_{i,R}}{\partial\{P\}_i}\dfrac{d\{P\}_i}{d\phi_j} + \dfrac{\partial\{R\}_{i,R}}{\partial\{R_{reac}\}_i}\dfrac{d\{R_{reac}\}_i}{d\phi_j}\end{Bmatrix}\right)
$$

and where $\dfrac{d\{R_{reac}\}_i}{d\phi_j}$ is eliminated by setting the following value for the respective Lagrange multiplier:

$$
\sum_{i=1}^{I}\left(\{\lambda\}_{i,R}^T\frac{\partial\{R\}_{i,R}}{\partial\{R_{reac}\}_i}\frac{d\{R_{reac}\}_i}{d\phi_j}\right) = \{0\} \quad\Rightarrow\quad \{\lambda\}_{i,R} = \{0\}
$$

and $\dfrac{d\{u\}_i}{d\phi_j}$ is eliminated by setting the respective Lagrange multiplier such that

$$
\sum_{i=1}^{I}\left(\left(\left(\frac{\partial D_k}{\partial D_{parameter}}\frac{\partial D_{parameter}}{\partial\{\sigma\}_{k,i}}\right)\frac{\partial\{\sigma\}_{k,i}}{\partial\{u\}_i} + \sum_{i=1}^{I}\{\lambda\}_{i,F}^T\frac{\partial\{R\}_{i,F}}{\partial\{u\}_i}\right)\frac{d\{u\}_i}{d\phi_j}\right) = \{0\}
$$

thereby

$$\left( \frac{\partial \{R\}_{i,F}}{\partial \{u\}_i} \right)^T \{\lambda\}_{i,F} = - \left( \boxed{\frac{\partial D_k}{\partial D_{parameter}} \frac{\partial D_{parameter}}{\partial \{\sigma\}_{k,i}}} \frac{\partial \{\sigma\}_{k,i}}{\partial \{u\}_i} \right)^T$$

The term $\frac{\partial D_k}{\partial D_{paramter}} \frac{\partial D_{paramter}}{\partial \{\sigma\}_{k,i}}$ are equal to $\frac{\partial D_k}{\partial \{\sigma\}_{k,i}}$ and the implementations computes it by a finite difference as discussed above.

Finally, the implementations compute the adjoint sensitivities of the fatigue damage $D_k$ with respect to the design variable $\phi_j$ as

$$\frac{dD_k}{d\phi_i} = \boxed{\frac{\partial D_k}{\partial D_{parameter}} \frac{\partial D_{parameter}}{\partial \phi_j}} + \sum_{i=1}^{I} \left( \boxed{\frac{\partial D_k}{\partial D_{parameter}} \frac{\partial D_{parameter}}{\partial \{\sigma\}_{k,i}}} \frac{\partial \{\sigma\}_{k,i}}{\partial \phi_j} + \{\lambda\}_{i,F}^T \left( \frac{\partial \{R\}_{i,F}}{\partial \phi_j} + \frac{\partial \{R\}_{i,F}}{\partial \{P\}_i} \frac{d\{P\}_i}{d\phi_j} \right) \right)$$

Implementations using a direct method are now discussed. Such implementations compute the fatigue damage sensitivity as discussed above in equation (1), i.e.,

$$\frac{dD_k}{d\phi_j} = \boxed{\frac{\partial D_k}{\partial D_{parameter}} \frac{\partial D_{parameter}}{\partial \phi_j}} + \sum_{i=1}^{I} \boxed{\frac{\partial D_k}{\partial D_{parameter}} \frac{\partial D_{parameter}}{\partial \{\sigma\}_{k,i}}} \left( \frac{\partial \{\sigma\}_{k,i}}{\partial \phi_j} + \frac{\partial \{\sigma\}_{k,i}}{\partial \{u\}_i} \frac{d\{u\}_i}{d\phi_j} \right)$$

The residual is equal to zero, i.e.,

$$\left\{ R_{i,F} \left( \{\phi\}, \{u\}_i, \{P\}_i \right) \right\}_i = \{0\}$$

and the implementations determine $\frac{d\{u\}_i}{d\phi_j}$ as

$$\frac{d\{R\}_{i,F}}{d\phi_j} = \frac{\partial \{R\}_{i,F}}{\partial \phi_j} + \frac{\partial \{R\}_{i,F}}{\partial \{u\}_i} \frac{d\{u\}_i}{d\phi_j} + \frac{\partial \{R\}_{i,F}}{\partial \{P\}_i} \frac{d\{P\}_i}{d\phi_j} = \{0\} \implies \frac{\partial \{R\}_{i,F}}{\partial \{u\}_i} \frac{d\{u\}_i}{d\phi_j} = -\frac{\partial \{R\}_{i,F}}{\partial \phi_j} - \frac{\partial \{R\}_{i,F}}{\partial \{P\}_i} \frac{d\{P\}_i}{d\phi_j}$$

The derivative $\frac{d\{P\}_i}{d\phi_j}$ of the external forces $\{P\}_i$ to the design variables$\{\phi\}_j$ is zero in many practical examples, unless external forces comprise mass dependent loading, e.g., gravity.

As mentioned above, the partial derivative $\frac{\Delta D_k}{\Delta \phi_j}$ is zero for many fatigue damage engineering applications.

The following two validations are related to the approximated partial derivatives for $\frac{\Delta D_k}{\Delta \{\sigma\}_{k,i}}$ with an adjoint sensitivity method.

**Validation 1 - Validation of partial derivatives of the fatigue damage with respect to the stress tensor**

This validation assesses that the numerical differentiation of the partial fatigue damage derivatives $\partial D_k / \partial \{\sigma\}_{k,i}$

with respect to the stress tensor using the finite difference scheme is valid.

FIG.s 5 and 6 show two multiaxial stress states and two load histories for which the fatigue damage calculation was done using mean stress corrections, rainflow-counting, critical plane analysis and material fatigue properties. Then fatigue damage derivatives with respect to the stress tensors were calculated for three different damage parameter type being Brown-Miller, Normal Stress and Von Mises Stress, respectively.

FIG.s 5 (for load case $i$=1 stress tensor for derivatives) and 6 (for load case $i$=2 stress tensor for derivatives) show the curves for the fatigue damage derivatives with respect to the stress tensor for $i$=1 and $i$=2. All curves are rather constant in the interval for $0.001 \leq \alpha \leq 0.01$. Therefore, the numerical differentiation of the partial fatigue damage derivatives with respect to the stress tensor is practically and realistically valid for engineering applications. Additionally, the results showed that applying forward finite difference stress perturbations around $\Delta\sigma_{mn}$=0.01$\sigma_{mn}$ or around $\Delta\sigma_{mn}$=0.001$\sigma_{mn}$ when approximating $\Delta D_k/\Delta\{\sigma\}_{k,i}$ yield reliable numerically differentiated partial fatigue damage derivative values.

**Validation 2** - **Total finite difference validation of adjoint fatigue damage sensitivities**

In this validation, the adjoint fatigue damage sensitivities computed by the implementations were validated by comparing to total finite difference sensitivities obtained using central finite difference as

$$\frac{dD_k}{d\phi_j} \approx \frac{\Delta D_k}{\Delta\phi_j} = \frac{D_k\left(\Delta\phi_i, \{u\}_{\Delta,n}\right) - D_k\left(-\Delta\phi_i, \{u\}_{-\Delta,n}\right)}{2\Delta\phi_i}$$

Then adjoint fatigue damage sensitivities dD$_k$/dφj were compared to the central finite difference sensitivities ΔDk/Δφj by calculating the ratio = (dD$_k$/dφj)/(ΔDk/Δφj). If the present ratio is close to one, then the adjoint fatigue damage sensitivities dDk/dφj obtained according to the implementations are validated.

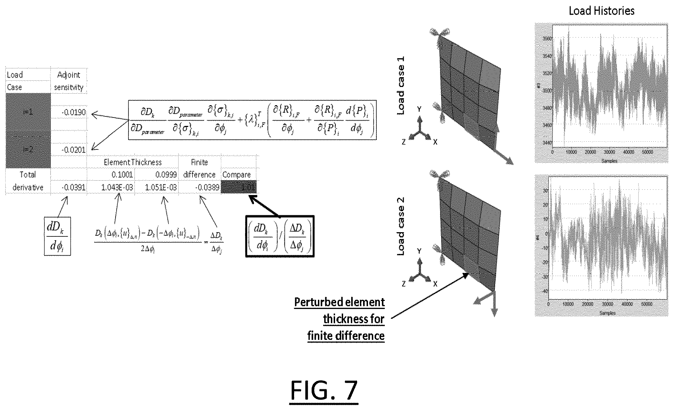

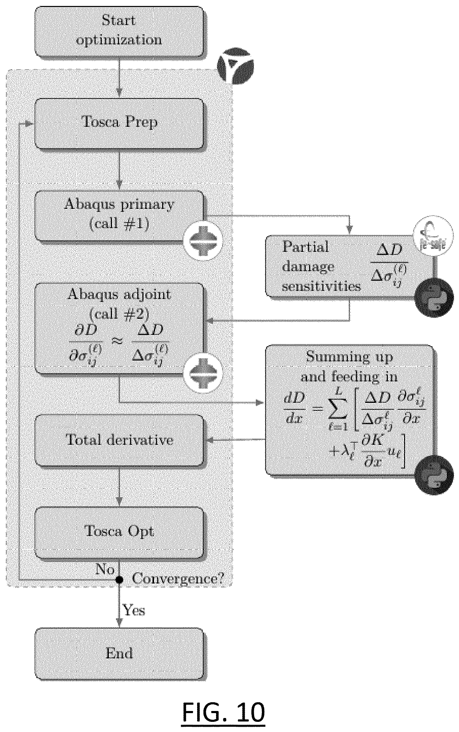

Initially, a shell structure was considered which consisted of 16 shell elements modeled by the Abaqus finite element solver as shown in Fig. 10. The structure was fully clamped in two corners and applied to two load case I=2 and time histories. The damage parameter type is Brown-Miller. Then the fatigue damage calculation used fe-safe for the rainflow-counting, mean stress corrections, critical plane analysis and material fatigue properties. The fatigue damage was evaluated at 20 material integration points for each shell element. The adjoint fatigue damage sensitivities $dD_k/d\phi j$ with respect to a sizing thickness design variable (indicated in FIG. 7) were calculated for the average over all material integration points. The ratio for $(dD_k/d\phi_j)/(\Delta D_k/\Delta\phi_j)$ is close to one which validates the adjoint fatigue damage sensitivity approach for $dD_k/d\phi_j$.

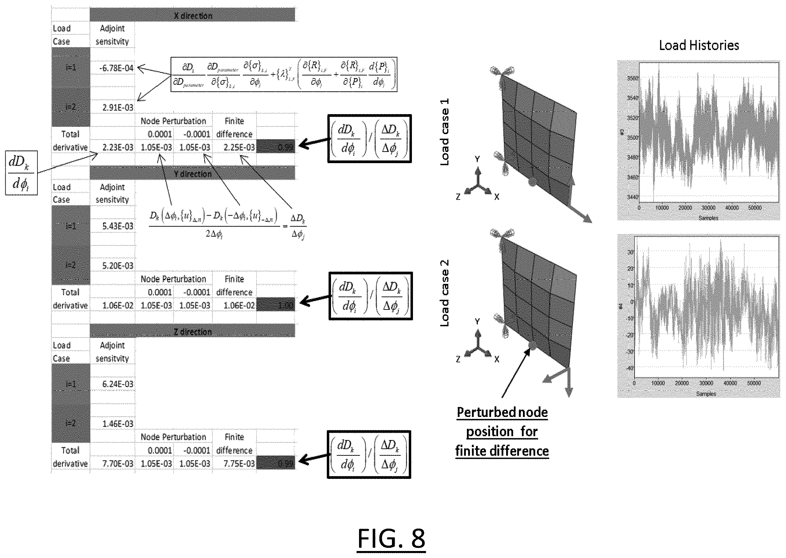

The same validation exercise was then done for the adjoint fatigue damage sensitivities $dD_k/d\phi j$ according to the implementations with respect to the 3D nodal position as design variable (indicated in below FIG. 8) for the x-, y- and z-direction, respectively. The ratio for $(dD_k/d\phi_j)/(\Delta D_k/\Delta\phi_j)$ was close to one for all three directions validating the approach for adjoint fatigue damage sensitivities $dD_k/d\phi_j$.

**Fatigue damage sensitivities applied in an iterative optimization workflow**

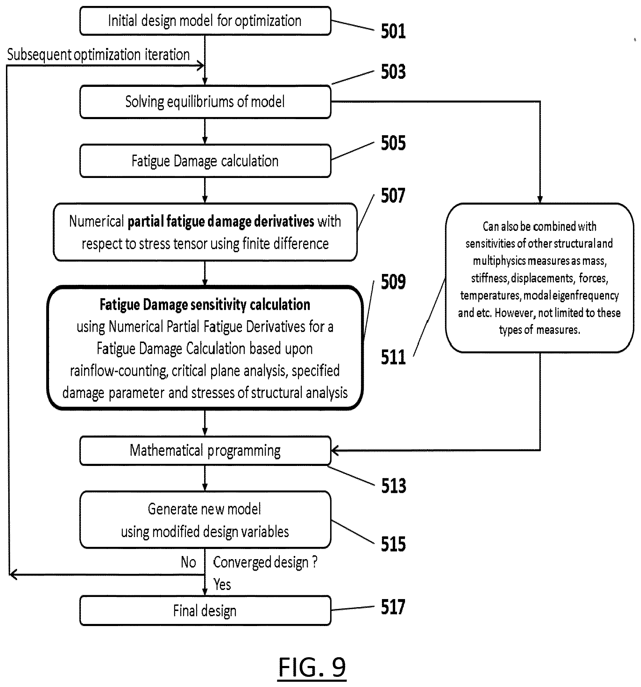

Examples of the implementations are now discussed. Such examples present designing a mechanical product comprising performing iterations of the implementations. The optimization flowchart in FIG. 9 shows a characteristic iterative design process based upon sensitivities. As a new addition, the optimization flowchart includes the fatigue damage sensitivity calculation using numerical partial fatigue derivatives for a fatigue damage calculation based upon rainflow-counting, critical plane analysis, specified damage parameter, stress mean correction, time histories of various load cases and stresses of structural analysis.

The iterative design process scheme can be implemented, for example, in a predefined workflow of a computer-aided engineering (CAE) system. First, a designer creates an initial structural model for the optimization 501 including the various loading and boundary conditions. The model is then subjected to an iterative design process 503-517.

Each design iteration determines the fatigue damage values in 505 using the structural stresses calculated in 503 for each load case. A fatigue measure defines a response for the current analysis model of a given optimization iteration. Thereby, a fatigue measure extracts one or several scalar values based upon the fatigue damage values for a given set of material points. The method then calculates fatigue damage sensitivities with respect to the design variables for 507-509. The components 503, 505, 507, 509 in FIG. 9 are the same components as 103, 105, 107 ,109, respectively in FIG. 3.

Additionally, the fatigue damage optimization can be combined with other measures 511 for which sensitivities are present. For example, direct measures of the model (e.g., mass, center of gravity, etc.) or measures determined by the results of a structural or/and a multiphysics solution for an equilibrium of the model (e.g., stresses, displacements, forces, modal eigenfrequencies, temperatures, etc.).

The fatigue measure(s) and possible other measure(s) are then applied for defining an optimization problem consisting of constraints which have to be fulfilled and an objective function which is optimized (minimized or maximized). The optimization problem is solved using mathematical programming 513. The mathematical programming is strictly based upon the values of the user defined design targets, measures, and their sensitivities. Thus, if the sensitivities are not correct then the mathematical programming solves the optimization problem inadequately. Thus, it is important that the sensitivities are accurate and reliable in 509 for 513.

A new physical model 515 for the next optimization iteration is generated based upon the design variables found in 513. Sometimes the design variables 513 and the physical model variables 515 might be the same, as for example thickness design variables for sizing optimization, but might also be different as for example density topology optimization where the design variables are relative densities that are mapped to the physical densities.

If the optimization has not converged, a new optimization cycle is started 503. The optimization workflow in FIG. 9 outputs the final design 517 when the optimization has converged. The optimization workflow is converged when the convergence criteria for the change in objective is less than 0.1% and the change in design variables is also less than 0.1%. If the determined fatigue damage sensitivities in 509 are not correctly implemented, then the constraints might not be fulfilled or/and the objective function not fully optimized.

The maximum fatigue damage measure 505 over all fatigue damage material points and the corresponding sensitivities 509 are evaluated using the following aggregation function

$$D_{\max} \approx \mathrm{Aggregation}\left(D_1, D_2, ..., D_k, ..., D_{K-1}, D_K\right) = \left(\sum_{k=1}^{N} D_k^Q\right)^{1/Q}$$

which represents a p-norm function as an example of aggregation function approximating the maximum damage over a structural partition given by material point k= 1, 2, ..., K for which fatigue damage is evaluated. When Q is a larger number (e.g., 6, 12, or 30) then the p-norm function approximates the maximum damage in a continuous manner integrable in the optimization. Other evaluation scheme could also be applied.

The iterative design process shown in FIG. 9 is implemented in SIMULIA Tosca Structure, SIMULIA Abaqus and SIMULIA fe-safe as shown FIG. 10.

## Example 1 - Different Damage Parameters

This example examines different damage parameters and their impact on the designs for the iterative workflow discussed previously.

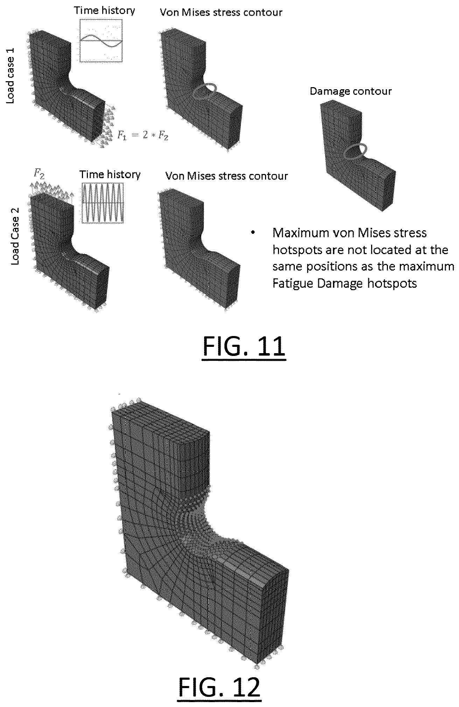

The stress calculations and the fatigue damage calculations of the initial design are shown in FIG. 11. The CAE model was constructed using continuum elements in Abaqus/CAE. The highest fatigue damage hotspots are not located at the same locations as the highest stress hotspots as the load case with the lowest stress has the time history with the highest oscillation. The initial design in FIG. 11 was being used for a non-parametric shape optimization based upon fatigue damage sensitivities (the workflow of FIG. 9 implemented in FIG. 10) including rainflow-counting, mean stress corrections, critical plane analysis, material fatigue properties, time histories of two load cases, stresses from two structural analyses and for a different specified damage parameter. A standard non-parametric shape optimization may be performed according to, e.g., Tosca. (2021). SIMULIA User Assistance, Dassault Systèmes.

The design nodes for the non-parametric fatigue damage shape optimization shown in FIG. 12 yield a total of 198 nodes and thereby, 198 design variables as the positions of the nodes in the non-parametric optimization were modified perpendicular to the surface.

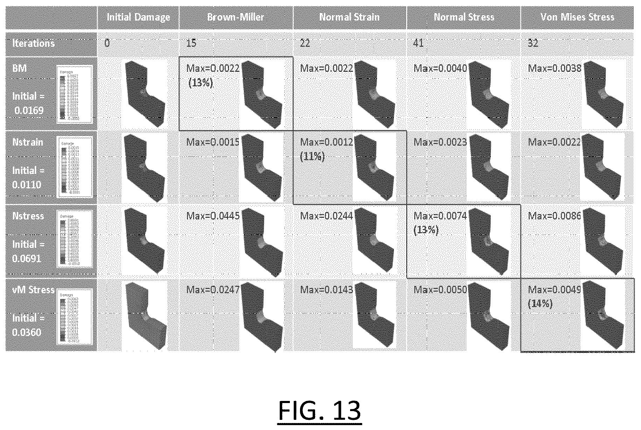

Four final numerical results for the optimized shapes are shown in FIG. 13 where the objective function is to minimize the maximum damage for all evaluated material points of the structure. Four different optimizations were done using four different damage parameter types being Brown-Miller, Normal Strain, Normal Stress and Von Mises Stress, respectively.

The first column at FIG. 13 shows the fatigue damage of the initial design and each following column shows the optimized design for a specific damage parameter type. The parenthesis in the diagonal boxes show the maximum fatigue damage value of the optimized design compared to the initial design. Significant reductions in the maximum damages compared to the initial designs for all damage parameter types are observed, thereby showing that the implementations may use different damage parameter types. Additionally, FIG. 13 shows the crossover checks (in the off-diagonal cells of the table) where the design optimized for a specific damage parameter type is analyzed for the three other damage parameter types. The numerical crossover checks show that a design should be optimized for the given damage parameter type which is valid for the specific material of an application.

**Example 2** - **Bead versus Sizing optimization design variables with or without constraint.**

This example examines the optimized design solutions for different design variables being bead design variables versus sizing thickness design variables for the iterative workflow discussed above.

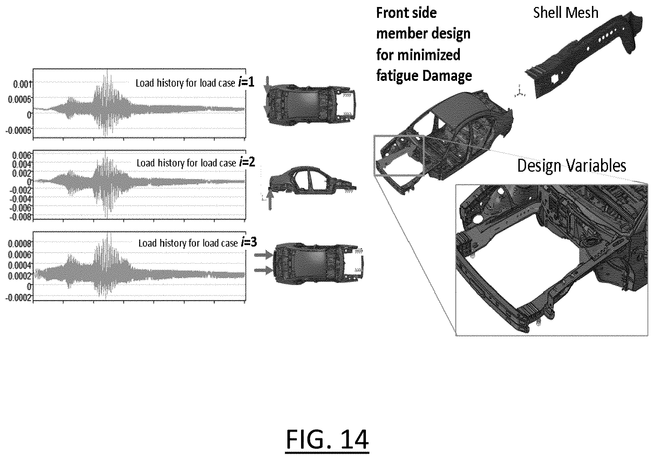

FIG. 14 shows a full Body in White (BIW) structure. The CAE model was constructed using Abaqus/CAE. The finite element modeling was done for the full BIW structure for each optimization iteration, so the correct stiffness is captured for large design modifications. The stresses of the finite element modeling were calculated for three load cases as shown in FIG. 14. The stresses of these three load cases and corresponding load case time histories were applied in a fatigue damage calculation using fe-safe. The fatigue damage calculation uses Brown-Miller damage parameter, rainflow-counting, mean stress corrections, critical plane analysis, material fatigue properties, time histories and stresses of the three load cases.

FIG. 14 further shows the design variables consisting of shell elements. For the present optimization the objective function was to minimize the maximum damage for material points of the elements being attached to the design variables. The first optimization was done using 1273 bead design variables where each node position is modified perpendicular to the surface. The bead design variables are allowed to move -0.5 mm in the negative normal direction and 5.0 mm in the positive normal direction.

The second and third optimizations were done using 1103 sizing thickness element design variables where each element thickness was modified. The sizing thickness variables were allowed to be reduced by 50% and increased by 200% compared to the initial thickness. Additionally, a mass constraint (511 in FIG. 9) was added to the third optimization run so the mass of the initial design do not exceed for the sizing optimized design.

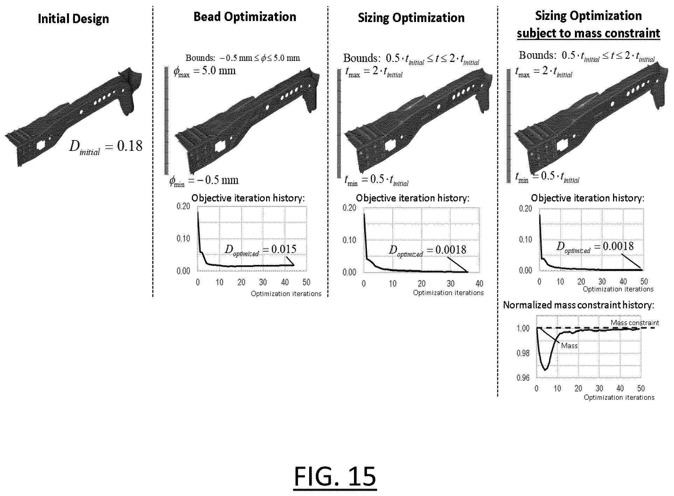

FIG. 15 shows the optimized designs for bead optimization and thickness sizing optimization, respectively. The optimization iteration history shows that the maximum fatigue damage is consistently decreasing over the optimization iterations. Thereby, the sensitivity $dD_k/d\phi_j$ of the fatigue damage $D_k$ with respect to various design variable $\phi_j$ types (non-parametric bead design variables or sizing thickness design variables) are reliable and practical for engineering applications.

FIG. 15 also shows the optimized design and its optimization iteration history for the thickness sizing optimization subject to an additional mass constraint (component 511 in FIG. 9). Consequently, fatigue damage optimization can be combined with other measures 511 in objective and constraints for which sensitivities are present.

## Claims

1. A computer-implemented method for designing a mechanical product formed in one or more materials, the method comprising:

   - providing inputs including:

     ∘ a finite element model (FEM) representing the mechanical product and having an initial value of design variables ($\phi_j$),
     ∘ one or more load cases,
     ∘ for each load case, a corresponding load history,
     ∘ boundary conditions,
     ∘ fatigue properties of the one or more materials, and
     ∘ a fatigue calculation scheme;

   - computing a distribution of fatigue damage ($D_k$) over the finite element model based on the inputs;
   - computing a distribution of sets of fatigue damage sensitivities over the finite element model based on the computed distribution of fatigue damage, each fatigue damage sensitivity $\left(\frac{\Delta D_k}{\Delta \phi_j} + \sum_{i=1}^{I} \frac{\Delta D_k}{\Delta \{\sigma\}_{k,i}} \left( \frac{\partial \{\sigma\}_{k,i}}{\partial \phi_j} + \frac{\partial \{\sigma\}_{k,i}}{\partial \{u\}_i} \frac{d\{u\}_i}{d\phi} \right) \right)$ of each set approximating a derivative $\left(\frac{dD_k}{d\phi_j}\right)$ of the fatigue damage relative to a respective design variable; and
   - updating the value of the design variables based on the fatigue damage sensitivities.

**2.** The method of claim 1, wherein each fatigue damage ($D_k$) is a function of the design variables ($\phi_j$) and one or more stresses ($\{\sigma\}_{k,i}$) each applied by one of the one or more load cases, the computing of the distribution of sets of fatigue damage sensitivities comprising, for each fatigue damage sensitivity, computing terms each representing an approximation $\left(\dfrac{\Delta D_k}{\Delta\{\sigma\}_{k,i}}\right)$ of a partial derivative of the fatigue damage ($D_k$) relative to each respective stress.

**3.** The method of claim 2, wherein each said computed term consists of finite difference approximations of the partial derivative of the fatigue damage ($D_k$) each relative to a stress component of the respective stress.

**4.** The method of claim 3, wherein the finite difference approximation consists of a backward finite difference approximation, a forward finite difference approximation, a central finite difference approximation, or a complex step approximation.

**5.** The method of claim 2, 3 or 4, wherein each fatigue damage sensitivity consists of a sum of:

- an approximation $\left(\dfrac{\Delta D_k}{\Delta\phi_j}\right)$ of a partial derivative of the fatigue damage ($D_k$) relative to the respective design variable ($\phi_j$), and

- a multiplication of the approximation of $\left(\dfrac{\Delta D_k}{\Delta\{\sigma\}_{k,i}}\right)$ the partial derivative of the fatigue damage ($D_k$) relative to each stress, by a derivative $\left(\dfrac{\partial\{\sigma\}_{k,i}}{\partial\phi_j} + \dfrac{\partial\{\sigma\}_{k,i}}{\partial\{u\}_i}\dfrac{d\{u\}_i}{d\phi_j}\right)$ of the stress relative to the respective design variable.

**6.** The method of claim 5, wherein the computing of the distribution of sets of fatigue damage sensitivities comprises, for each fatigue damage sensitivity, either:

- summing

  ∘ the approximation $\left(\dfrac{\Delta D_k}{\Delta\phi_j}\right)$ of the partial derivative of the fatigue damage ($D_k$) relative to the respective design variable ($\phi_j$), and

  ∘ the multiplication of the approximation of $\left(\dfrac{\Delta D_k}{\Delta\{\sigma\}_{k,i}}\right)$ the partial derivative of the fatigue damage ($D_k$) relative to each stress, by a derivative $\left(\dfrac{\partial\{\sigma\}_{k,i}}{\partial\phi_j} + \dfrac{\partial\{\sigma\}_{k,i}}{\partial\{u\}_i}\dfrac{d\{u\}_i}{d\phi_j}\right)$ of the stress relative to the respective design variable; or

- summing

  ∘ the computed approximation $\left(\dfrac{\Delta D_k}{\Delta\phi_j}\right)$ of the partial derivative of the fatigue damage ($D_k$) relative to the respective design variable ($\phi_j$),

  ∘ the approximation of $\left(\dfrac{\Delta D_k}{\Delta\{\sigma\}_{k,i}}\right)$ the partial derivative of the fatigue damage ($D_k$) relative to each stress multiplied by a partial derivative $\left(\dfrac{\partial\{\sigma\}_{k,i}}{\partial\phi_j}\right)$ of said stress relative to the respective design variable ($\phi_j$), and

  ∘ an inner product between a derivative $\left(\dfrac{\partial\{R\}_{i,F}}{\partial\phi_j} + \dfrac{\partial\{R\}_{i,F}}{\partial\{P\}_i}\dfrac{d\{P\}_i}{d\phi_j}\right)$ of a residual ($\{R\}_{i,F}$) relative to the respective design variable and an approximation of an adjoint variable, the adjoint variable ($\{\lambda\}_{i,F}$) being a solution of a linear system of equation, the linear system having a coefficient matrix $\left(\left(\frac{\partial \{R\}_{i,F}}{\partial \{u\}_i}\right)^T\right)$ consisting of partial derivative $\left(\frac{\partial \{R\}_{i,F}}{\partial \{u\}_i}\right)$ of the residual ($\{R\}_{i,F}$) relative to a deformation ($\{u\}_i$) as and right-hand side $\left(\left(\frac{\Delta D_k}{\Delta \{\sigma\}_{k,i}} \frac{\partial \{\sigma\}_{k,i}}{\partial \{u\}_i}\right)^T\right)$ comprising a multiplication of the approximation of $\left(\frac{\Delta D_k}{\Delta \{\sigma\}_{k,i}}\right)$ the partial derivative of the fatigue damage ($D_k$) relative to each stress by a partial derivative $\left(\frac{\partial \{\sigma\}_{k,i}}{\partial \{u\}_i}\right)$ of said stress relative to the deformation.

7. The method according to any of claims 1 to 6, wherein the computing of the distribution of fatigue damage over the finite element model based on the inputs comprises:

   - computing one or more distributions of stress over the finite element model each corresponding to a respective load case; and
   - for each computed distribution of stress, computing a distribution of a fatigue damage parameter ($D_{parameter}$) over the finite element model using the fatigue calculation scheme and based on the fatigue properties of the one or more materials;

   wherein the computing the distribution of fatigue damage ($D_k$) over the finite element model is based on the computed distribution of the fatigue damage parameter and the load history of each of each of the one or more load cases.

8. The method of claim 7, wherein the computing the distribution of fatigue damage parameter over the finite element model comprises, for each computed distribution of stress, computing one or more stresses and/or one or more strains corresponding to the computed distribution of stress according to the fatigue calculation scheme, the fatigue calculation scheme comprising any of the following functions:

   - a Brown-Miller function,
   - a Von-Mises function,
   - a signed Von-Mises function,
   - a normal stress function,
   - a normal strain function, and
   - a user-defined function.

9. The method of any of claims 7 or 8, wherein the computing of the distribution of fatigue damage further comprises a critical plane analysis.

10. The method of any of claims 7 to 9, wherein the computing of the distribution of fatigue damage further comprises rainflow-counting based on the load history of each of the one or more load cases.

11. A computer-implemented method for designing a mechanical product comprising performing iterations of the method of any of claims 1 to 10 so as to optimize performance of the mechanical product, wherein each iteration comprises updating the finite element model based on the updated value of the design variables.

12. A process of production of a mechanical product comprising:

   - designing a mechanical product by performing the method of any one of claims 1 to 11; and
   - producing the mechanical product based on the design.

13. A computer program comprising instructions for performing the method according to any one of claims 1 to 11.

14. A computer readable storage medium having recorded thereon the computer program of claim 13.

**15.** A system comprising a processor coupled to a memory, the memory having recorded thereon the computer program of claim 13.

## FIG. 1

FIG. 2

**103**

Structural Stress Analysis for load case $i=1,2...,I-1,I$

$$\left\{R\left(\{\phi\},\{u\}_i,\{P\}_i,\{R_{reac}\}_i\right)\right\}_i = \{0\}$$

**105**

Fatigue Damage Calculation at material point $k=1,2...,K-1,K$ based upon Rainflow-counting, critical plane analysis and user specified Damage Parameter

$$D_k\left(D_{parameter}\left(\{\phi\},\left\{\sigma\left(\{\phi\},\{u\}_i\right)\right\}_{k,i}\right)\right)$$

**107**

Numerical Partial Fatigue Damage Derivatives with respect to Stress tensor and design variable at material points using finite difference:

$$\frac{\partial D_k}{\partial\{\sigma\}_{k,i}} \approx \frac{\Delta D_k}{\Delta\{\sigma\}_{k,i}}\bigg|_{\text{for constant}\,\{\phi\}} \quad \text{and} \quad \frac{\partial D_k}{\partial\phi_j} \approx \frac{\Delta D_k}{\Delta\phi_j}\bigg|_{\text{for constant}\,\{\sigma\}}$$

**109**

Fatigue Damage Sensitivities with respect to Design variables $\dfrac{dD_k}{d\phi_j}$ for $j=1,2...,J-1,J$

- Design variables: $\{\phi\}$

Variables of Structural Stress
Analysis for load case $i$:
- Residual: $\{R\}_i$
- Displacement : $\{u\}_i$
- External force: $\{P\}_i$
- Reaction force: $\{R_{reac}\}_i$
- Stress $\{\sigma\}_{k,i}$

Fatigue calculation
at material point $k$:
- Fatigue damage: $D_k$
using:
- Damage parameter: $D_{parameter}$
- Time histories and superposition
  for stresses of load cases
- Mean stress correction (if applied)
- Material data
- Critical plane analysis
- Rainflow counting

## FIG. 3

**401**

Structural Finite Element Stress Analysis

- Stress $\{\sigma\}_{k,j}$
- For each load case $i$
- At each material point $k=1,2.,K$ (= at each FE integration point)

3D continuum:
$$\{\sigma\} = \begin{Bmatrix} \sigma_{xx} \\ \sigma_{yy} \\ \sigma_{zz} \\ \sigma_{xy} \\ \sigma_{yz} \\ \sigma_{zx} \end{Bmatrix}$$
and
2D continuum:
$$\{\sigma\} = \begin{Bmatrix} \sigma_{xx} \\ \sigma_{yy} \\ \sigma_{xy} \end{Bmatrix}$$

Load history for load case $i=1$  Load history for load case $i=2$

Superposition in time over load cases:
$$\{\sigma(t)\}_k = f_1(t)\{\sigma\}_{k,1} + f_2(t)\{\sigma\}_{k,2} + \ldots\ldots + f_I(t)\{\sigma\}_{k,I}$$

**402**

Damage Parameter method

- Specify Damage Parameter method $D_{parameter}$ e.g. von Mises, Normal stress Brown-Miller, etc.
- Calculate $D_{paremeter}(\{\sigma(t)\}, \Theta, t)$ for:
  - Superposition for $i=1,2,\ldots,I$
  - Planes $\Theta$ having different orientations
  - Mean stress correction (if applied)

Different Planes

Damage parameter $D_{parameter}$ value history in time

Accumulated Damage

- Calculate Accumulated Fatigue Damage $D_k$ using:
  - Rainflow-counting in time for the damage parameter $D_{parameter}$ on critical planes (=planes with highest damage)
  - Material fatigue properties

Rainflow counting

**403**

Accumulated fatigue damage value $D_k$ for material point $k$

# FIG. 4

Forward finite difference:

$$\left.\frac{\partial D}{\partial(\sigma_{mn})_i}\right|_{\text{for constant }\{\phi\}} \approx \frac{\Delta D}{\Delta(\sigma_{mn})_i} = \frac{D\left((\sigma_{mn})_i + \Delta(\sigma_{mn})_i\right) - D\left((\sigma_{mn})_i\right)}{\Delta(\sigma_{mn})_i} = \frac{D\left((\sigma_{mn})_i + \alpha(\sigma_{mn})_i\right) - D\left((\sigma_{mn})_i\right)}{\alpha(\sigma_{mn})_i}$$

Partial derivatives for Brown-Miller damager parameter *i*=1

Partial derivatives for Normal Stress damager parameter *i*=1

Load case

| | *i*=1 | *i*=2 |
|---|---|---|
| $\sigma_{11}$ | 0.58 | 0.15 |
| $\sigma_{22}$ | -0.35 | 0.17 |
| $\sigma_{33}$ | 0.95 | -0.23 |
| $\sigma_{12}$ | 0.88 | 0.71 |
| $\sigma_{23}$ | 0.09 | -0.84 |
| $\sigma_{13}$ | 0.67 | 0.45 |

Load history for load case *i*=1

Load history for load case *i*=2

Partial derivatives for Von Mises Stress damager parameter *i*=1

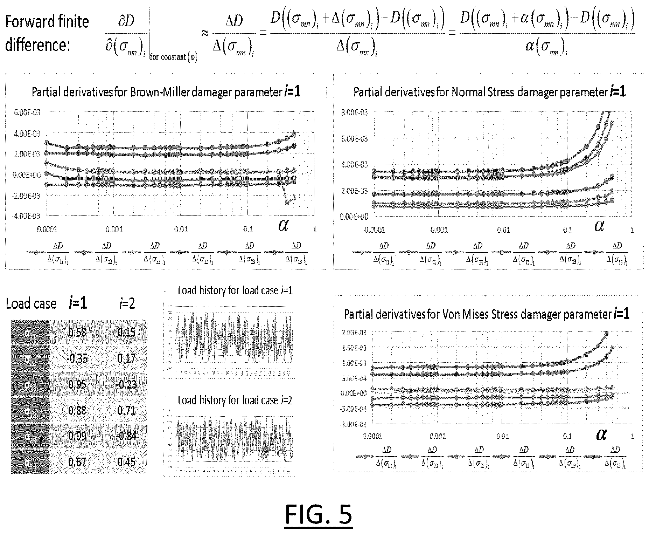

## FIG. 5

Forward finite difference:

$$\left.\frac{\partial D}{\partial (\sigma_{mn})_i}\right|_{\text{for constant }\{\phi\}} \approx \frac{\Delta D}{\Delta (\sigma_{mn})_i} = \frac{D\big((\sigma_{mn})_i + \Delta(\sigma_{mn})_i\big) - D\big((\sigma_{mn})_i\big)}{\Delta(\sigma_{mn})_i} = \frac{D\big((\sigma_{mn})_i + \alpha(\sigma_{mn})_i\big) - D\big((\sigma_{mn})_i\big)}{\alpha(\sigma_{mn})_i}$$

Partial derivatives for Brown-Miller damager parameter $i=1$

Partial derivatives for Normal Stress damager parameter $i=1$

Load history for load case $i=1$

Load history for load case $i=2$

Partial derivatives for Von Mises Stress damager parameter $i=1$

| Load case | $i=1$ | $i=2$ |
|---|---|---|
| $\sigma_{11}$ | 0.58 | 0.15 |
| $\sigma_{22}$ | -0.35 | 0.17 |
| $\sigma_{33}$ | 0.95 | -0.23 |
| $\sigma_{12}$ | 0.88 | 0.71 |
| $\sigma_{23}$ | 0.09 | -0.84 |
| $\sigma_{13}$ | 0.67 | 0.45 |

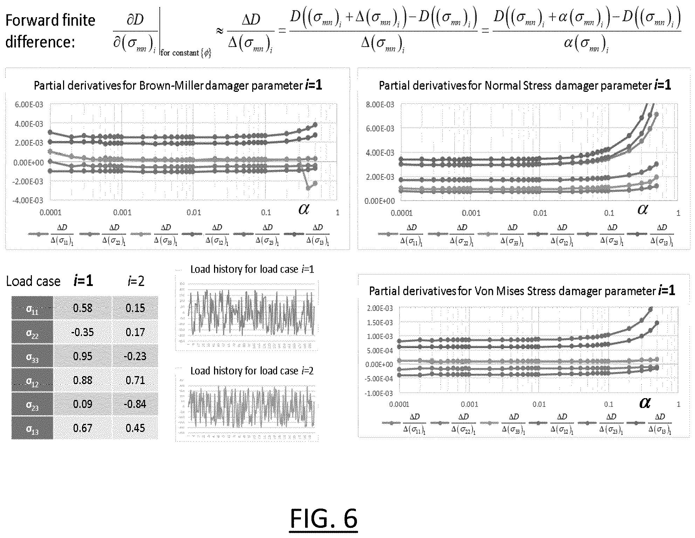

FIG. 6

| Load Case | Adjoint sensitivity |
|---|---|
| i=1 | -0.0190 |
| i=2 | -0.0201 |

$$\frac{\partial D_k}{\partial D_{parameter}}\frac{\partial D_{parameter}}{\partial\{\sigma\}_{k,i}}\frac{\partial\{\sigma\}_{k,i}}{\partial\phi_j}+\{\lambda\}_{i,F}^T\left(\frac{\partial\{R\}_{i,F}}{\partial\phi_j}+\frac{\partial\{R\}_{i,F}}{\partial\{P\}_i}\frac{d\{P\}_i}{d\phi_j}\right)$$

| | Element Thickness | | Finite difference | Compare |
|---|---|---|---|---|
| Total derivative | 0.1001 | 0.0999 | | |
| -0.0391 | 1.043E-03 | 1.051E-03 | -0.0389 | |

$$\frac{dD_k}{d\phi_i}$$

$$\frac{D_k\left(\Delta\phi_i,\{u\}_{\Delta\pi}\right)-D_k\left(-\Delta\phi_i,\{u\}_{-\Delta\pi}\right)}{2\Delta\phi_i}=\frac{\Delta D_k}{\Delta\phi_j}$$

$$\left(\frac{dD_k}{d\phi_i}\right)\bigg/\left(\frac{\Delta D_k}{\Delta\phi_i}\right)$$

Perturbed element thickness for finite difference

Load case 1

Load case 2

Load Histories

## FIG. 7

FIG. 8

Initial design model for optimization — **501**

Subsequent optimization iteration

Solving equilibriums of model — **503**

Fatigue Damage calculation — **505**

Numerical **partial fatigue damage derivatives** with respect to stress tensor using finite difference — **507**

**509**

**Fatigue Damage sensitivity calculation**
using Numerical Partial Fatigue Derivatives for a Fatigue Damage Calculation based upon rainflow-counting, critical plane analysis, specified damage parameter and stresses of structural analysis

**511**

Can also be combined with sensitivities of other structural and multiphysics measures as mass, stiffness, displacements, forces, temperatures, modal eigenfrequency and etc. However, not limited to these types of measures.

Mathematical programming

**513**

Generate new model using modified design variables — **515**

No | Converged design ?
Yes

Final design — **517**

<u>FIG. 9</u>

FIG. 10

FIG. 11

FIG. 12

FIG. 13

FIG. 14

FIG. 15

**EUROPEAN SEARCH REPORT**

Application Number

EP 22 15 6649

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JEONG SEUNG HYUN ET AL: "Topology optimization considering the fatigue constraint of variable amplitude load based on the equivalent static load approach", APPLIED MATHEMATICAL MODELLING, GUILDFORD, GB, vol. 56, 19 December 2017 (2017-12-19), pages 626-647, XP085336557, ISSN: 0307-904X, DOI: 10.1016/J.APM.2017.12.017 * abstract; figures 11(a),(b) * * section 1 * * section 2.2 * * section 4.1.1 * * section 4.1.2 * * the whole document * ----- | 1-15 | INV. G06F30/23 ADD. G06F111/06 G06F119/02 G06F119/04 |
| X | SURESH SHYAM ET AL: "Topology optimization using a continuous-time high-cycle fatigue model", STRUCTURAL AND MULTIDISCIPLINARY OPTIMIZATION, SPRINGER BERLIN HEIDELBERG, BERLIN/HEIDELBERG, vol. 61, no. 3, 26 November 2019 (2019-11-26), pages 1011-1025, XP037038970, ISSN: 1615-147X, DOI: 10.1007/S00158-019-02400-W [retrieved on 2019-11-26] * abstract * * page 1016, right-hand column, last paragraph - page 1017, left-hand column, paragraph first * * appendix A * * the whole document * ----- -/-- | 1-15 | TECHNICAL FIELDS SEARCHED (IPC) G06F |

The present search report has been drawn up for all claims

| Place of search | Date of completion of the search | Examiner |
|---|---|---|
| Munich | 19 July 2022 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 227 846 A1

EUROPEAN SEARCH REPORT

Application Number

EP 22 15 6649

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | COUCEIRO IVÁN ET AL: "Optimization of Offshore Steel Jackets: Review and Proposal of a New Formulation for Time-Dependent Constraints", ARCHIVES OF COMPUTATIONAL METHODS IN ENGINEERING, SPRINGER NETHERLANDS, DORDRECHT, vol. 27, no. 4, 7 May 2019 (2019-05-07), pages 1049-1069, XP037224834, ISSN: 1134-3060, DOI: 10.1007/S11831-019-09342-Y [retrieved on 2019-05-07] * abstract * * section 7.2 * * the whole document * ----- | 1-15 | |

TECHNICAL FIELDS SEARCHED (IPC)

The present search report has been drawn up for all claims

| Place of search | Date of completion of the search | Examiner |
|---|---|---|
| Munich | 19 July 2022 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

41

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3327593 A

- EP 21306754

### Non-patent literature cited in the description

- **HOLMBERG, E.** Stress and fatigue constrained topology optimization. Diss. Linköping University, 2016
- **OEST, J.** Structural Optimization with Fatigue Constraints. Diss. Aalborg University, 2017
- **ZHANG et al.** Fatigue-based topology optimization with non-proportional loads. *Computer Methods in Applied Mechanics and Engineering,* 2019, vol. 345, 805-825
- **SURESH.** Topology Optimization for Additive Manufacturing Involving High-Cycle Fatigue. Linköping University Electronic Press, 2020, vol. 1878
- **OLESEN et al.** Simultaneous optimization of topology and print orientation for transversely isotropic fatigue. *Structural and Multidisciplinary Optimization,* 2021, 1-22
- **JEONG et al.** Fatigue and static failure considerations using a topology optimization method. *Applied Mathematical Modelling,* 2015, vol. 39 (3-4), 1137-1162
- **LEE et al.** Topology optimization considering fatigue life in the frequency domain. *Computers & Mathematics with Applications,* 2015, vol. 70 (8), 1852-1877
- **GERZEN et al.** Fatigue sensitivities for sizing optimization of shell structures. *12th world congress on structural and multidisciplinary optimization,* 2017
- **TORTORELLI ; MICHALERIS.** Design sensitivity analysis: Overview and review. *Inverse Problems in Engineering,* 1994, vol. 1, 71-105